# EUROPEAN PATENT APPLICATION

(11) **EP 4 600 788 A1**
(43) Date of publication of application: **13.08.2025**
(21) Application number: 23947600.5
(22) Date of filing: 01.08.2023
(51) Int. Cl.: G06F 3/0354, A63F 13/213

(54) **INPUT DEVICE AND SYSTEM**

(71) Applicant: Nintendo Co., Ltd., Kyoto-shi, Kyoto 601-8501 (JP)
(72) Inventor: TAKEI, Masaya, Kyoto-shi, Kyoto 601-8501 (JP); KORIYAMA, Kazuhiko, Kyoto-shi, Kyoto 601-8501 (JP)
(74) Representative: Bardehle Pagenberg Partnerschaft mbB Patentanwälte Rechtsanwälte
(86) International application number: PCT/JP2023/028165
(87) International publication number: WO 2025/027803

(57) **Abstract**

An input device includes a front surface, an upper surface, a first side surface, and a second side surface, a direction input portion, a first upper-surface button, and a mouse operation sensor. The first side surface is located at one side in a left-right direction. The second side surface is located at the other side in the left-right direction. The direction input portion is provided at the front surface. The first upper-surface button is provided at the upper surface and can be pressed down around a first rotation shaft that extends in a direction including a component in the left-right direction. The mouse operation sensor is configured to detect reflected light from a surface to be detected, reflected light varying as the input device moves over the surface to be detected with one of the first side surface and the second side surface being placed on the surface.

## Description

### TECHNICAL FIELD

The present disclosure relates to an input device and a system.

### BACKGROUND ART

Japanese Patent Laying-Open No. 2002-157085 (PTL 1) discloses a wireless mouse. The wireless mouse is assumed to be used only as a mouse.

### CITATION LIST

### PATENT LITERATURE

PTL 1: Japanese Patent Laying-Open No. 2002-157085

### SUMMARY OF INVENTION

### TECHNICAL PROBLEM

An object of the present disclosure is to provide a novel input device that can be used as a mouse and can be used in a manner other than a mouse.

### SOLUTION TO PROBLEM

An input device according to the present disclosure includes a front surface, an upper surface, a first side surface, and a second side surface, a direction input portion, a first upper-surface button, and a mouse operation sensor. The first side surface is located at one side in a left-right direction. The second side surface is located at the other side in the left-right direction. The direction input portion is provided at the front surface. The first upper-surface button is provided at the upper surface and configured to be pressed down around a first rotation shaft that extends in a direction including a component in the left-right direction. The mouse operation sensor is configured to detect reflected light from a surface to be detected, the reflected light varying as the input device moves over the surface to be detected with one side surface of the first side surface and the second side surface being placed on the surface to be detected.

In the input device according to the above, the first rotation shaft may extend in a direction inclined toward a lower side of the input device with respect to a direction perpendicular to the surface to be detected when the one side surface is placed on the surface to be detected.

In the input device according to the above, an angle formed between the surface to be detected and the first rotation shaft when the one side surface is placed on the surface to be detected may be larger than 45°.

In the input device according to the above, an angle formed between the surface to be detected and the first rotation shaft when the one side surface is placed on the surface to be detected may be 45°.

In the input device according to the above, the first rotation shaft may extend along a plane direction in parallel to the front surface.

The input device according to the above may further include a front-surface button provided at the front surface, the front-surface button being configured to be pressed down in a linear direction. The first rotation shaft may extend along a plane direction perpendicular to the linear direction.

The input device according to the above may further include a second upper-surface button provided at the upper surface and in front of the first upper-surface button.

The input device according to the above may further include a second upper-surface button provided at the upper surface and in front of the first upper-surface button, the second upper-surface button being configured to be pushed in in a linear direction.

The input device according to the above may further include a second upper-surface button provided at the upper surface and in front of the first upper-surface button, the second upper-surface button being configured to pivot around a second rotation shaft that extends in a direction including a component in a front-rear direction.

The input device according to the above may further include a second upper-surface button provided at the upper surface and in front of the first upper-surface button, the second upper-surface button being configured to be pushed in in a linear direction and being configured to pivot around a second rotation shaft that extends in a direction including a component in a front-rear direction.

In the input device according to the above, the second rotation shaft may extend in a direction in parallel to the surface to be detected when the one side surface is placed on the surface to be detected.

In the input device according to the above, the first rotation shaft may extend in a direction in parallel to a plane direction in which the second upper-surface button is movable.

In the input device according to the above, in an upward-downward direction, the first upper-surface button may have an upper end located at a lower side relative to an upper end of the second upper-surface button. There may be a height difference between the first upper-surface button and the second upper-surface button.

The input device according to the above may further include a switch activated by pressing down of the second upper-surface button. A support surface of the switch may be configured to be oriented in a direction inclined toward a lower side of the input device with respect to a direction perpendicular to the surface to be detected when the one side surface is placed on the surface to be detected.

The input device according to the above may further include a first biasing member and a second biasing member configured to bias the second upper-surface button upward. The switch may be arranged between the first biasing member and the second biasing member in the left-right direction.

In the input device according to the above, an angle formed between the surface to be detected and the support surface when the one side surface is placed on the surface to be detected may be larger than 45°.

In the input device according to the above, the angle formed between the surface to be detected and the support surface when the one side surface is placed on the surface to be detected may be equal to or larger than 60°.

In the input device according to the above, the second upper-surface button may include one of a first shaft hole and a first shaft to be arranged in the first shaft hole and one of a second shaft hole and a second shaft to be arranged in the second shaft hole. The input device may include the other of the first shaft hole and the first shaft and the other of the second shaft hole and the second shaft. The second shaft hole may be provided at a side opposite to the one side surface in the left-right direction relative to the first shaft hole and longer in the left-right direction than the first shaft hole.

In the input device according to the above, the first shaft may be configured to move in an upward-downward direction in the first shaft hole and the second shaft may be configured to move in the upward-downward direction in the second shaft hole.

According to the input device according to the above, in a front-rear direction, a length from the one side surface to a rear end of a rear surface located opposite to the front surface may be longer than a length from the one side surface to a front end of the front surface.

According to the input device according to the above, in a front-rear direction, the first upper-surface button may have a rear end located at the rear of a rear end of the one side surface.

In the input device according to the above, a length in an upward-downward direction of the one side surface and a length in the left-right direction of the front surface may be longer than a length in a front-rear direction of the one side surface.

The input device according to the above may further include a hole through which reflected light is guided to the mouse operation sensor, the hole being provided in the one side surface, and one set of four buttons provided at the front surface. In an upward-downward direction, the hole may be located between a stick which serves as the direction input portion and the one set of four buttons.

In the input device according to the above, at least a part of the one side surface may implement an attachment portion for attachment to another device. The hole may be provided in the attachment portion.

The input device according to the above may directly or indirectly be fixed to another input device.

In the input device according to the above, the another input device may include a mouse operation sensor.

In the input device according to the above, in an upward-downward direction, the first upper-surface button may have a lower end located between an upper end and a lower end of the one set of four buttons.

In the input device according to the above, the one set of four buttons may include a first button and a second button distant from each other in the upward-downward direction and a third button and a fourth button being distant from each other in the left-right direction and arranged between the first button and the second button in the upward-downward direction. In the upward-downward direction, the first upper-surface button may have the lower end located between an upper end and a lower end of each of the third button and the fourth button.

According to the input device according to the above, in the upward-downward direction, the first upper-surface button may have a lower end located between an upper end and a lower end of the stick.

The input device according to the above may be attachable to a main body apparatus and may further include an ejection operation lever provided at a rear surface located opposite to the front surface, the ejection operation lever being movable from the one side surface toward the other side surface of the first side surface and the second side surface.

A system according to the present disclosure includes the input device according to the above and a main body apparatus that communicates with the input device.

### ADVANTAGEOUS EFFECTS OF INVENTION

According to the present disclosure, a novel input device that can be used as a mouse and can be used in a manner other than a mouse can be provided.

### BRIEF DESCRIPTION OF DRAWINGS

Fig. 1 is a schematic perspective view showing a configuration of an input device according to a first embodiment.
Fig. 2A is a schematic six-view drawing showing the configuration of the input device according to the first embodiment.
Fig. 2B is an enlarged view of an area IIB in Fig. 2A.
Fig. 3 is a schematic cross-sectional view showing only a projection along the line III-III in Fig. 1.
Fig. 4 is a schematic front view showing the configuration of the input device according to the first embodiment.
Fig. 5 is an enlarged schematic diagram of an area V in Fig. 4.
Fig. 6 is a schematic six-view drawing showing a configuration of a second input device.
Fig. 7 is a schematic front view showing a configuration of an exemplary information processing apparatus.
Fig. 8 is a schematic front view showing a configuration of an exemplary main body apparatus.
Fig. 9 is a schematic perspective view showing a configuration of a right side surface of the main body apparatus.
Fig. 10 is a schematic cross-sectional view showing a state in which a first input device has been attached to the main body apparatus.
Fig. 11 is a schematic diagram showing a manner before an ejection operation lever is operated.
Fig. 12 is a schematic diagram showing a manner while the ejection operation lever is being operated.
Fig. 13 is a schematic perspective view showing a configuration of a first upper-surface button (right).
Fig. 14 is a schematic perspective view showing a part of an internal structure of the first input device.
Fig. 15 is a schematic perspective view showing a state in which the first upper-surface button (right) has been attached to a configuration shown in Fig. 14.
Fig. 16 is a first schematic cross-sectional view showing a part of the internal structure of the first input device.
Fig. 17A is a schematic cross-sectional view showing positional relation between the first upper-surface button (right) and a first switch before a user operates the first upper-surface button (right).
Fig. 17B is a schematic cross-sectional view showing positional relation between the first upper-surface button (right) and the first switch after the user operated the first upper-surface button (right).
Fig. 18 is a schematic right side view and a schematic rear view showing a direction of pressing down of the first upper-surface button (right).
Fig. 19 is a schematic perspective view showing a configuration of a second upper-surface button (right).
Fig. 20 is a second schematic cross-sectional view showing a part of the internal structure of the first input device.
Fig. 21 is a third schematic cross-sectional view showing a part of the internal structure of the first input device.
Fig. 22 is a schematic cross-sectional view showing a state in which the second upper-surface button (right) pivots around a first shaft.
Fig. 23 is a schematic cross-sectional view showing a configuration around the second upper-surface button (right) with the first upper-surface button (right) having been removed.
Fig. 24 is a schematic perspective view showing a state in which the input device is vertically held.
Fig. 25 is a schematic front view showing a state of use of the input device as a mouse.
Fig. 26 is a schematic side view showing the state of use of the input device as the mouse.
Fig. 27 is a schematic diagram showing a first state of use with both hands.
Fig. 28 is a schematic diagram showing a second state of use with both hands.
Fig. 29 is a schematic perspective view showing a state in which the input device is horizontally held.
Fig. 30 is a schematic front view showing a state in which the first input device and the second input device have been attached to the main body apparatus.
Fig. 31 is a block diagram showing a configuration of a system according to the present disclosure.
Fig. 32 is a schematic front view showing a configuration of a first input device and a second input device according to a second embodiment.
Fig. 33 is a schematic left side view of the configuration of the first input device according to the second embodiment.
Fig. 34 is a schematic front view showing a state in which the first input device according to the second embodiment is operated as the mouse.
Fig. 35 is a schematic front view showing a configuration of an input device according to a third embodiment.
Fig. 36 is a schematic left side view showing the configuration of the input device according to the third embodiment.
Fig. 37 is a schematic right side view showing a configuration of a main body apparatus.
Fig. 38 is a schematic side view showing a state in which a first input device has been attached to the main body apparatus.

### DESCRIPTION OF EMBODIMENTS

An embodiment of the present disclosure (which is also referred to as the present embodiment) will be described in detail with reference to the drawings. The same or corresponding elements in the drawings have the same reference characters allotted and description thereof will not be repeated.

### [First Embodiment]

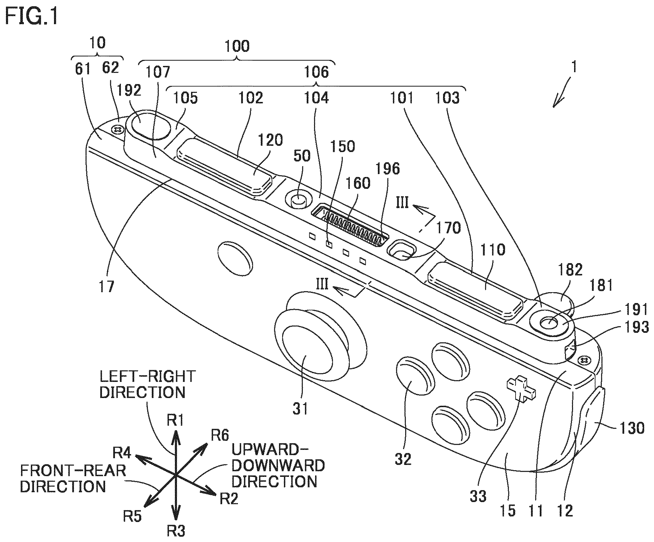

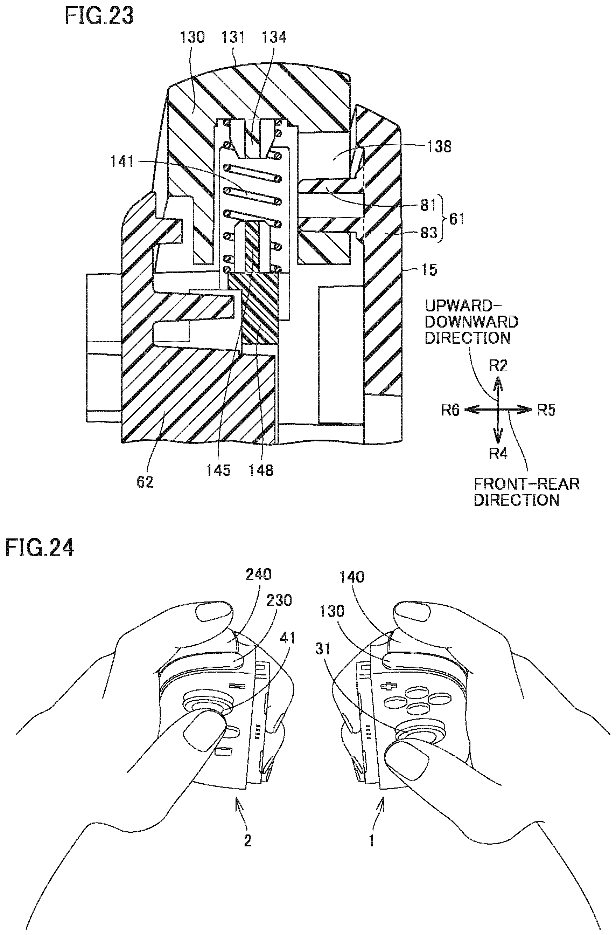

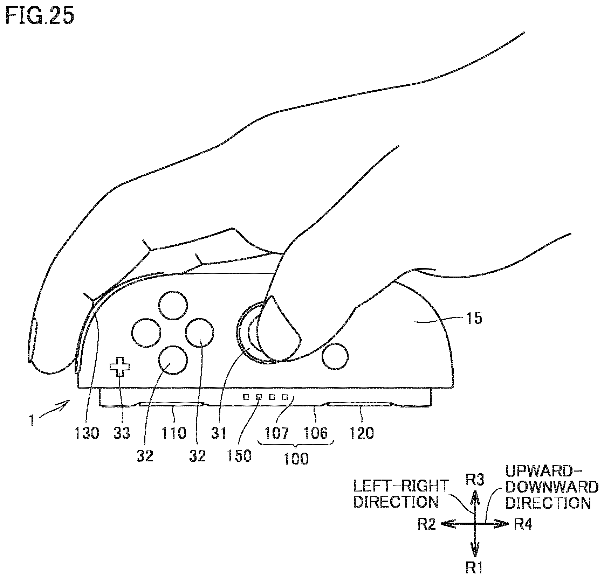

Fig. 1 is a schematic perspective view showing a configuration of an input device according to a first embodiment. As shown in Fig. 1, an input device 1 in the present embodiment is, for example, a game controller. A user can vertically hold input device 1 (see, for example, Fig. 24). The user can hold input device 1 in a lifted-up state and operate various input portions located in input device 1. The user can use input device 1 as a mouse (see, for example, Fig. 25). The user can hold input device 1, for example, as being placed on a desk or the like and operate various input portions located in input device 1.

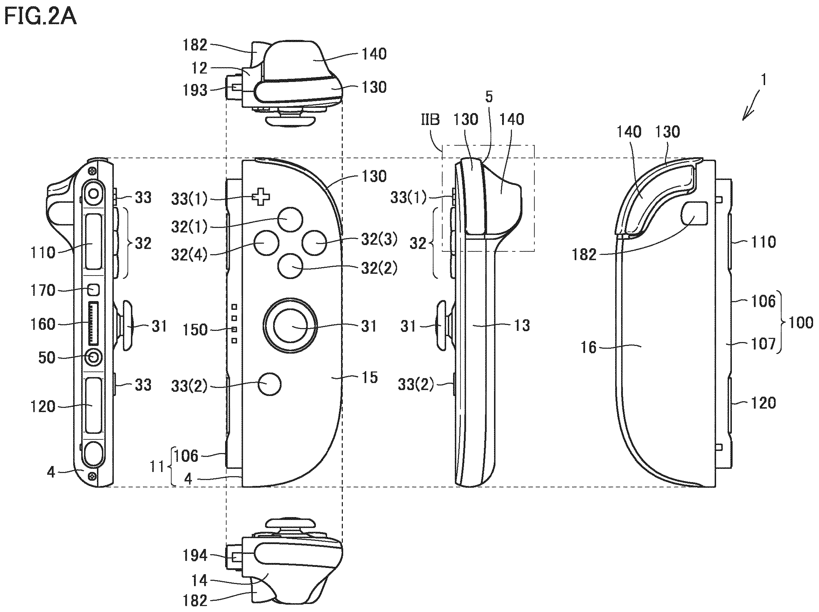

Fig. 2A is a schematic six-view drawing showing the configuration of input device 1 according to the first embodiment. As shown in Figs. 1 and 2A, input device 1 of the present embodiment includes a first upper-surface button (right) 140, a second upper-surface button (right) 130, a first side-surface button (right) 110, a second side-surface button (right) 120, a synchronization button 50, a joystick 31 representing an exemplary direction input portion, one set of four buttons 32, a + button 33(1), and a home button 33(2). These are exemplary input portions. Input device 1 may include at least one of these input portions. Input device 1 may include another input portion such as a touch pad or a pressure sensor instead of or in addition to these input portions.

As shown in Figs. 1 and 2A, input device 1 is provided with a front surface 15, a rear surface 16, a first side surface 11, an upper surface 12, a second side surface 13, and a lower surface 14. Front surface 15 is a surface opposed to the user who uses input device 1 in an integrally held state, a horizontally held state, and a vertically held state which will be described later. Front surface 15 is also referred to as a front face. Rear surface 16 is located opposite to front surface 15. Rear surface 16 is also referred to as a back surface. Front surface 15 and rear surface 16 are each contiguous to first side surface 11, upper surface 12, second side surface 13, and lower surface 14.

A direction toward first side surface 11 is also referred to as a first direction R1. First direction R1 also referred to as a left side or a left direction. A direction opposite to first direction R1 is also referred to as a third direction R3. Third direction R3 is also referred to as a right side or a right direction. First direction R1 and third direction R3 are also collectively referred to as a left-right direction.

A direction toward a side of upper surface 12 is also referred to as a second direction R2. Second direction R2 is also referred to as an upper side, above, or an upward side. A direction opposite to second direction R2 is also referred to as a fourth direction R4. Fourth direction R4 is also referred to as a lower side, below, or a downward side. Second direction R2 and fourth direction R4 are also collectively referred to as an upward-downward direction.

A direction toward front surface 15 is also referred to as a fifth direction R5. Fifth direction R5 is also referred to as forward, a front surface side, or a front face side. A direction opposite to the fifth direction is also referred to as a sixth direction R6. Sixth direction R6 is also referred to as rearward, a rear surface side, or a back surface side. Fifth direction R5 and sixth direction R6 are also collectively referred to as a front-rear direction.

First side surface 11 is located at one side in the left-right direction. First side surface 11 is located, for example, at a side in the left direction with respect to front surface 15. First side surface 11 is a side surface that extends in a longitudinal direction of front surface 15. In the present embodiment, the longitudinal direction of front surface 15 is the upward-downward direction of front surface 15. First side surface 11 extends in the upward-downward direction. In another manner, first side surface 11 may be located, for example, at a side in the right direction with respect to front surface 15.

Second side surface 13 is located at the other side in the left-right direction. Second side surface 13 is located opposite to first side surface 11. Second side surface 13 is located, for example, at the side in the right direction with respect to front surface 15. Second side surface 13 is located at a third direction R3 side of first side surface 11. Second side surface 13 extends in the upward-downward direction. In another manner, second side surface 13 may be located, for example, at the side in the left direction with respect to front surface 15.

Upper surface 12 is a side surface that is contiguous to an upper end of first side surface 11 and extends in a direction away from first side surface 11. Upper surface 12 is arranged at the upper side in the integrally held state and the vertically held state. An end of upper surface 12 distant from first side surface 11 is contiguous to an upper end of second side surface 13.

Lower surface 14 is a side surface that is contiguous to a lower end of first side surface 11 and extends in the direction away from first side surface 11. Lower surface 14 is arranged at the lower side in the integrally held state and the vertically held state. An end of lower surface 14 distant from first side surface 11 is contiguous to a lower end of second side surface 13. Upper surface 12 is located at a second direction R2 side of lower surface 14.

As shown in Figs. 1 and 2A, direction input portion 31 is provided at front surface 15. Direction input portion 31 is, for example, a joystick. Front surface 15 is provided with + button 33(1), four buttons 32, joystick 31, and home button 33(2) from the upper side, in the upward-downward direction. Four buttons 32 refer to one set of four buttons. Four buttons 32, + button 33(1), and home button 33(2) are front-surface buttons configured to be pressed down in a linear direction.

Four buttons 32 include a first button 32(1), a second button 32(2), a third button 32(3), and a fourth button 32(4). First button 32(1) and second button 32(2) are distant from each other in the upward-downward direction. Third button 32(3) and fourth button 32(4) are distant from each other in the left-right direction and arranged between first button 32(1) and second button 32(2) in the upward-downward direction.

In the upward-downward direction, first button 32(1) is located at the upper side of second button 32(2). In the left-right direction, fourth button 32(4) is located at the left side of third button 32(3). In the left-right direction, joystick 31 is located between third button 32(3) and fourth button 32(4). In the upward-downward direction, joystick 31 is located substantially on an extension of a straight line that connects first button 32(1) and second button 32(2) to each other.

Joystick 31 is configured to be tilted in directions around 360 degrees and may be configured to be tilted in any direction including first direction R1 to fourth direction R4. Joystick 31 may be configured to be tilted only in at least one direction. Joystick 31 may be configured to be pushed in. Joystick 31 may be configured to be slid in each direction, instead of being configured to be tilted. A main body apparatus 3 may perform processing in accordance with a signal indicating an operation direction, in an executed program, as a result of an operation on joystick 31 by the user.

First upper-surface button (right) 140 is provided at upper surface 12. First upper-surface button (right) 140 may be arranged in a hole provided in upper surface 12 or arranged on upper surface 12. First upper-surface button (right) 140 extends in the direction away from first side surface 11. First upper-surface button (right) 140 should only be provided at least in part at upper surface 12 and other part thereof may be provided at a surface other than upper surface 12. First upper-surface button (right) 140 is provided with an operation surface curved as projecting convexly outward when viewed in a direction from front surface 15 toward rear surface 16. A rear-side portion of the operation surface of first upper-surface button (right) 140 is warped upward when viewed in a direction from second side surface 13 toward first side surface 11.

In the upward-downward direction, first upper-surface button (right) 140 may have a lower end located between an upper end and a lower end of the one set of four buttons. In the upward-downward direction, first upper-surface button (right) 140 may have the lower end located between an upper end and a lower end of each of third button 32(3) and fourth button 32(4). In the upward-downward direction, first upper-surface button (right) 140 may have the lower end located at the lower side relative to first button 32(1) or at the upper side relative to second button 32(2).

Second upper-surface button (right) 130 is provided at upper surface 12. Second upper-surface button (right) 130 may be arranged in a hole provided in upper surface 12 or arranged on upper surface 12. Second upper-surface button (right) 130 is provided in front of first upper-surface button (right) 140. Second upper-surface button (right) 130 is located at a fifth direction R5 side relative to first upper-surface button (right) 140. Second upper-surface button (right) 130 extends in the direction away from first side surface 11. Second upper-surface button (right) 130 should only be provided at least in part at upper surface 12 and other part thereof may be provided at a surface other than upper surface 12. Second upper-surface button (right) 130 is provided with an operation surface curved as projecting convexly outward when viewed in the direction from front surface 15 toward rear surface 16.

In the upward-downward direction, second upper-surface button (right) 130 may have a lower end located between the upper end and the lower end of the one set of four buttons. In the upward-downward direction, second upper-surface button (right) 130 may have the lower end located between the upper end and the lower end of each of third button 32(3) and fourth button 32(4). In the upward-downward direction, second upper-surface button (right) 130 may have the lower end located at the lower side relative to first button 32(1) or at the upper side relative to second button 32(2).

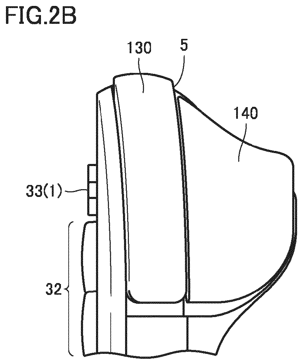

As shown in Fig. 2B, in the upward-downward direction, first upper-surface button (right) 140 has the upper end located at the lower side relative to the upper end of second upper-surface button (right) 130. A height difference 5 is formed between first upper-surface button (right) 140 and second upper-surface button (right) 130. The operation surface of second upper-surface button (right) 130 does not have to be provided with a height difference from the operation surface of first upper-surface button (right) 140, and it may be provided as being continuously contiguous. Another component may lie between first upper-surface button (right) 140 and second upper-surface button (right) 130.

Input device 1 includes a projection 100. Projection 100 includes a top surface 106 and an outer peripheral surface 107 that extends from top surface 106 to the right side. As shown in Fig. 1, top surface 106 includes a first top surface area 101, a second top surface area 102, a third top surface area 103, a fourth top surface area 104, and a fifth top surface area 105. First top surface area 101 is located between third top surface area 103 and fourth top surface area 104. Second top surface area 102 is located between fourth top surface area 104 and fifth top surface area 105. Fourth top surface area 104 is located between first top surface area 101 and second top surface area 102. First top surface area 101 is located at the third direction R3 side relative to third top surface area 103 and fourth top surface area 104. Second top surface area 102 is located at the third direction R3 side relative to fifth top surface area 105 and fourth top surface area 104. Outer peripheral surface 107 is contiguous to top surface 106 as surrounding an outer edge of top surface 106. Projection 100 extends along the upward-downward direction. A length in the upward-downward direction of top surface 106 is longer than a length in the front-rear direction of top surface 106.

A length in the upward-downward direction of first side surface 11 is longer than a length in the front-rear direction of first side surface 11. The length in the upward-downward direction of first side surface 11 is longer than a length in the front-rear direction of second side surface 13. A length in the upward-downward direction of second side surface 13 is longer than the length in the front-rear direction of second side surface 13. The length in the upward-downward direction of second side surface 13 is longer than the length in the front-rear direction of first side surface 11.

A length in the upward-downward direction of front surface 15 is longer than a length in the left-right direction of front surface 15. The length in the upward-downward direction of front surface 15 is longer than the length in the front-rear direction of first side surface 11. The length in the upward-downward direction of front surface 15 is longer than the length in the front-rear direction of second side surface 13. A length in the upward-downward direction of rear surface 16 is longer than a length in the left-right direction of rear surface 16. The length in the upward-downward direction of rear surface 16 is longer than the length in the front-rear direction of first side surface 11. The length in the upward-downward direction of rear surface 16 is longer than the length in the front-rear direction of second side surface 13.

In the front-rear direction, first upper-surface button (right) 140 may have a rear end located at the rear of a rear end of first side surface 11. In the front-rear direction, first upper-surface button (right) 140 may have a front end located in front of the rear end of first side surface 11.

In the front-rear direction, second upper-surface button (right) 130 may have a rear end located in front of the rear end of first side surface 11. In the front-rear direction, second upper-surface button (right) 130 may have a front end located at the rear of the front end of first side surface 11.

In the front-rear direction, a length from first side surface 11 to a rear end of rear surface 16 may be longer than a length from first side surface 11 to a front end of front surface 15. In the present embodiment, front surface 15 is flat and the length from first side surface 11 to the front end of front surface 15 is 0. In the present embodiment, the rear end of rear surface 16 refers to a rear end of a portion in rear surface 16 that rises rearward together with first upper-surface button (right) 140. Front surface 15 may be provided with a portion that rises forward.

As shown in Fig. 1, projection 100 lies between a front-surface-side housing 61 and a rear-surface-side housing 62 that form a main body housing 10. First side surface 11 is provided with a housing opening 17 defined by an end surface of front-surface-side housing 61 and an end surface of rear-surface-side housing 62. Projection 100 projects through housing opening 17 from the inside of main body housing 10. In other words, projection 100 projects in the left direction from a portion of main body housing 10 that forms first side surface 11.

As shown in Figs. 1 and 2A, outer peripheral surface 107 of projection 100 includes a first engagement hole 193 and a second engagement hole 194 in respective longitudinal end surfaces. First engagement hole 193 is provided in a first end surface of projection 100. Second engagement hole 194 is provided in a second end surface of projection 100. First engagement hole 193 is different in shape from second engagement hole 194. In the front-rear direction, first engagement hole 193 may be different in length from second engagement hole 194. In the left-right direction, first engagement hole 193 may be different in length from second engagement hole 194.

A not-shown peripheral device is removably attached to input device 1. Examples of the peripheral device include a strap attachment formed from a strap to be wrapped around the wrist during use of input device 1 and a housing to which the strap is connected. An engagement element corresponding to first engagement hole 193 is provided at an inner peripheral surface of the peripheral device and/or an engagement element corresponding to second engagement hole 194 is provided at an inner peripheral surface at the other end, to thereby firmly attach the peripheral device to input device 1.

As shown in Figs. 1 and 2A, first side-surface button (right) 110 and second side-surface button (right) 120 are provided at projection 100. First side-surface button (right) 110 and second side-surface button (right) 120 are buttons on which the user performs a pushing-down operation and they are components that move in the right direction by the pushing-down operation. First side-surface button (right) 110 and second side-surface button (right) 120 are further configured to be moved also in the left direction from a state in which the pushing-down operation by the user is not performed on them. In the present embodiment, each of first side-surface button (right) 110 and second side-surface button (right) 120 is a single component and the entirety thereof is made of a material which is not a magnet but a material attractable to a magnet. A material for these buttons is not particularly limited, and it may be made, for example, of a soft magnetic material. For example, iron may be adopted as the material for these buttons, and by way of example, steel plate cold commercial (SPCC) may be adopted. These buttons may contain a plurality of materials and may contain a soft magnetic material. The material for these buttons may contain a magnet or may contain a magnet and a soft magnetic material.

Synchronization button 50 is provided at projection 100. Synchronization button 50 is pressed down by the user. Synchronization button 50 is provided between first side-surface button (right) 110 and second side-surface button (right) 120 in the upward-downward direction. More specifically, synchronization button 50 is provided between a first terminal 160 and second side-surface button (right) 120 in the upward-downward direction. Synchronization button 50 may be used for an instruction for setting processing relating to wireless communication between input device 1 and main body apparatus 3.

Input device 1 includes first terminal 160. First terminal 160 includes a plurality of terminals that extend along the left-right direction. Top surface 106 is provided with a second opening 196. Second opening 196 opens in top surface 106. First terminal 160 can be accessed from the outside of top surface 106 through second opening 196.

Second opening 196 is provided in top surface 106 between first side-surface button (right) 110 and second side-surface button (right) 120. First terminal 160 is provided between first side-surface button (right) 110 and second side-surface button (right) 120 in the upward-downward direction.

A light emission portion 150 is provided at outer peripheral surface 107 of projection 100. More specifically, light emission portion 150 is provided at the front face side of outer peripheral surface 107. From another point of view, an area of outer peripheral surface 107 where light emission portion 150 is provided faces the front face side. When the user views front surface 15 of input device 1, the user can visually recognize light from light emission portion 150. More specifically, light radiated to the outside through light emission portion 150 from a light source provided inside input device 1 is visually recognizable.

Light emission portion 150 can notify the user of predetermined information. Light emission portion 150 may show to the user, information for identification of each game controller when main body apparatus 3 communicates with a plurality of game controllers. Light emission portion 150 may show another type of information to the user. The number of light emission portions 150 is not particularly limited, and for example, four light emission portions 150 are provided. In the present embodiment, four light emission portions 150 are arranged as being aligned in the upward-downward direction. For example, among four light emission portions 150, light emission portion 150 in a portion corresponding to an identification number provided to a game controller may be turned on, or light emission portion(s) 150 in number corresponding to the identification number may be turned on.

Light emission portion 150 is provided between first side-surface button (right) 110 and second side-surface button (right) 120 in the upward-downward direction. Light emission portion 150 is provided at a position superimposed on first terminal 160 in the upward-downward direction. From another point of view, when viewed from the front face side, light emission portion 150 is located at the lower side of second opening 196.

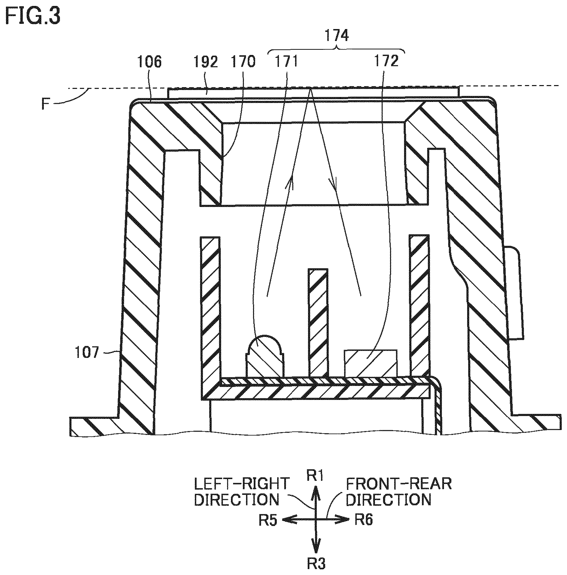

Top surface 106 of projection 100 is provided with a first opening 170. First opening 170 is a hole that guides reflected light to a mouse operation sensor 174 (see Fig. 3) which will be described later. First opening 170 and mouse operation sensor 174 are provided between first side-surface button (right) 110 and second side-surface button (right) 120 in the upward-downward direction. More specifically, first opening 170 is provided between first terminal 160 and first side-surface button (right) 110 in the upward-downward direction. In the upward-downward direction, first opening 170 is provided between a lower end of stick 31 and the upper end of four buttons 32.

Input device 1 can be used as a mouse by being placed in such a manner that top surface 106 of projection 100 is opposed to a surface to be detected such as a desktop. Front surface 15 is larger in area than first side surface 11. When first side surface 11 is placed on the surface to be detected, an area of projection of input device 1 viewed in a direction in parallel to the surface to be detected and in the direction from front surface 15 toward rear surface 16 is larger than an area of projection of input device 1 viewed from a direction perpendicular to the surface to be detected.

On top surface 106 of projection 100, a first mouse skate 191 and a second mouse skate 192 are placed. First mouse skate 191 and second mouse skate 192 raise a height of the top surface of projection 100. In the present embodiment, a top surface of first mouse skate 191 and a top surface of second mouse skate 192 form a part of first side surface 11. First mouse skate 191 and second mouse skate 192 do not have to be provided. In use of input device 1 as the mouse, first mouse skate 191 and second mouse skate 192 themselves come in contact with the surface to be detected to suppress direct contact with the surface to be detected, of a portion of top surface 106 of projection 100 where the mouse skate is not provided.

The top surfaces of first mouse skate 191 and second mouse skate 192 are located leftmost in input device 1. First mouse skate 191 and second mouse skate 192 are not particularly limited in shape, and they may be, for example, in any of a circular shape, an elliptical shape, a rectangular shape, and the like. First mouse skate 191 and second mouse skate 192 may each be provided with a through hole. First mouse skate 191 and second mouse skate 192 may be the same or different in shape.

In the upward-downward direction, first mouse skate 191 is located at a side of upper surface 12 relative to first side-surface button (right) 110. In the upward-downward direction, first side-surface button (right) 110 is located between first terminal 160 and first mouse skate 191. More specifically, in the upward-downward direction, first side-surface button (right) 110 is located between first opening 170 and first mouse skate 191.

In the upward-downward direction, second mouse skate 192 is located at a side of lower surface 14 relative to second side-surface button (right) 120. In the upward-downward direction, second side-surface button (right) 120 is located between first terminal 160 and second mouse skate 192. More specifically, in the upward-downward direction, second side-surface button (right) 120 is located between synchronization button 50 and second mouse skate 192.

### <Mouse>

Fig. 3 is a schematic cross-sectional view showing only the projection along the line III-III in Fig. 1. As shown in Fig. 3, a first input device 1 includes mouse operation sensor 174. Mouse operation sensor 174 is arranged inside projection 100. Mouse operation sensor 174 is, for example, an optical sensor. Mouse operation sensor 174 includes, for example, a light source 171 and a light reception sensor 172. Input device 1 may include a lens configured to condense light emitted from light source 171 and/or light guided to light reception sensor 172.

As shown in Fig. 3, light source 171 emits light. Light may be, for example, red light, blue light, or laser beams. A wavelength of light is not particularly limited. Light from light source 171 irradiates a surface to be detected F through first opening 170. Light reception sensor 172 detects reflection by surface to be detected F, of light radiated from light source 171, reflected light being varied with movement of input device 1 relative to surface to be detected F and introduced through first opening 170. A second input device 2 which will be described later is also similarly configured.

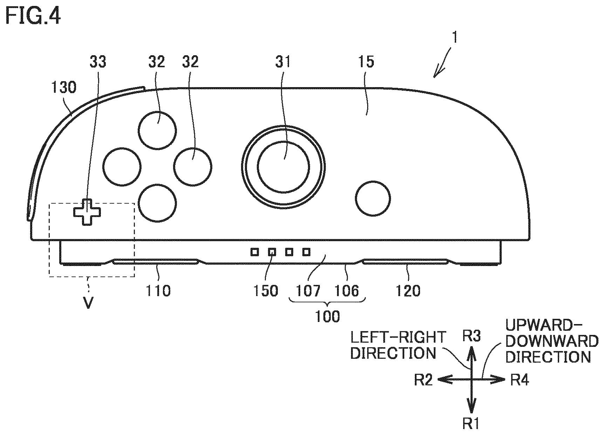

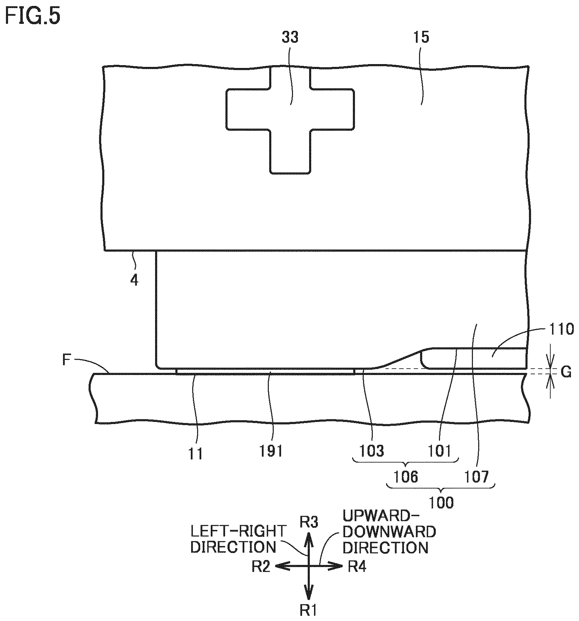

Fig. 4 is a schematic front view showing the configuration of input device 1 according to the first embodiment. Fig. 4 shows a posture when input device 1 is used as the mouse. Fig. 5 is an enlarged schematic diagram of an area V in Fig. 4. As shown in Fig. 5, when input device 1 is placed on surface to be detected F such that top surface 106 of projection 100 is opposed to surface to be detected F, first mouse skate 191 comes in contact with surface to be detected F. Though not shown, second mouse skate 192 also comes in contact with surface to be detected F. First side-surface button (right) 110 is distant from surface to be detected F. A top surface of first side-surface button (right) 110 is located at the third direction R3 side relative to the top surface of first mouse skate 191. Though surface to be detected F is not particularly limited, it is, for example, a surface of a desk. Input device 1 is configured to move over surface to be detected F.

First mouse skate 191 is provided in third top surface area 103. First side-surface button (right) 110 is provided in first top surface area 101. A thickness of a portion of first mouse skate 191 that projects from third top surface area 103 in the upward-downward direction is, for example, 0.2 mm. Third top surface area 103 is distant from surface to be detected F. A distance between surface to be detected F and third top surface area 103 in the left-right direction is, for example, 0.2 mm. A distance G between surface to be detected F and the operation surface of first side-surface button (right) 110, on the other hand, is, for example, 0.3 mm. In other words, the distance from surface to be detected F to the operation surface of first side-surface button (right) 110 may be longer than the distance from surface to be detected F to third top surface area 103. Though not shown in Fig. 5, fourth top surface area 104 where second opening 196 is provided is also distant from surface to be detected F.

Being provided with mouse operation sensor 174, input device 1 can also be used as the mouse. First opening 170 is provided in top surface 106 which is a part of first side surface 11. Therefore, when input device 1 is placed on surface to be detected F such that top surface 106 of projection 100 is opposed to surface to be detected F, first opening 170 is located at a position proximate to surface to be detected F. Therefore, light reflected from surface to be detected F can effectively be taken into first opening 170.

An information processing unit of main body apparatus 3 may calculate a movement parameter (for example, a direction of movement or a moving distance) relating to movement of input device 1 with respect to surface to be detected F, based on a result of detection by mouse operation sensor 174. Main body apparatus 3 may perform predetermined game processing based on the determined movement parameter, in an executed program. The movement parameter may be calculated in input device 1 (in the information processing unit included in mouse operation sensor 174 or input device 1) and the calculated parameter may be transmitted to main body apparatus 3. When input device 1 is moved with respect to surface to be detected F while it is distant from surface to be detected F, accurate measurement of movement of input device 1 with respect to surface to be detected F may be disallowed. For example, input device 1 may be configured not to be able to appropriately detect light reflected from surface to be detected F for measurement of movement with respect to surface to be detected F when top surface 106 of projection 100 is distant from surface to be detected F by at least 1 cm, at least 5 mm, or at least 1 mm. By way of example, mouse operation sensor 174 may be designed such that the distance of input device 1 from surface to be detected F at which a direction or a distance of movement of input device 1 with respect to surface to be detected F can accurately be detected is at most 1 cm, at most 5 mm, or at most 1 mm.

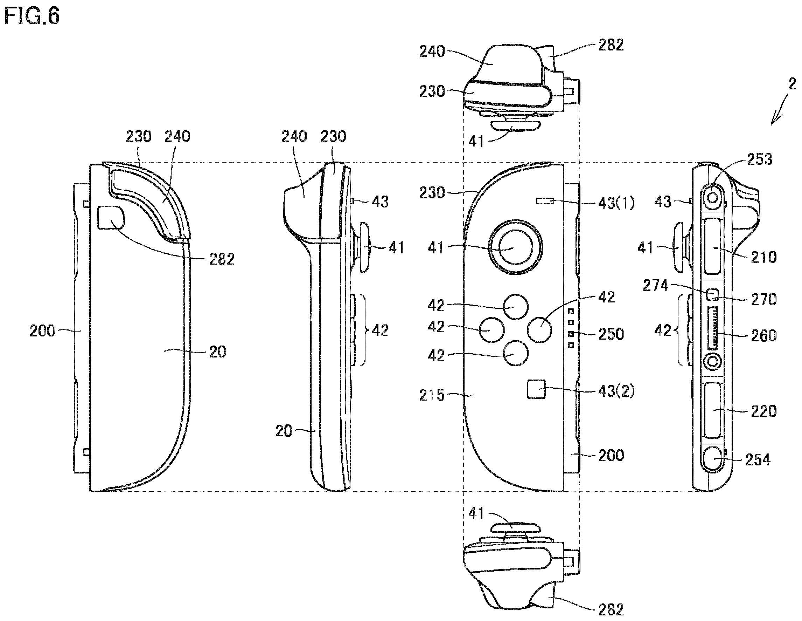

Fig. 6 is a schematic six-view drawing showing a configuration of the second input device. As shown in Fig. 6, second input device 2 is, for example, a game controller and includes a joystick 41 which represents an exemplary direction input portion and one set of four buttons 42 arranged in a cross shape. Though input device 1 includes + button 33(1) and home button 33(2), second input device 2 includes a - button 43(1) and a capture button 43(2).

Second input device 2 includes a first upper-surface button (left) 240, a second upper-surface button (left) 230, a first side-surface button (left) 210, and a second side-surface button (left) 220. First upper-surface button (left) 240 and second upper-surface button (left) 230 are provided at a main body housing 20. In the upward-downward direction, first upper-surface button (left) 240 has a lower end located between an upper end and a lower end of stick 41. First side-surface button (left) 210 and second side-surface button (left) 220 are provided at a projection 200. Second input device 2 further includes a light emission portion 250, a second terminal 260 to be connected to a main body second terminal 341 of main body apparatus 3, a first opening 270 that guides light to a mouse operation sensor 274, a first mouse skate 253, a second mouse skate 254, and an operation portion 282 that implements a removal mechanism for removal of projection 200 from main body apparatus 3. A structure or a function of each feature is substantially the same as that of input device 1. At least one of functions may be different. For example, capture button 43(2) may be used for storage of an image to be outputted to display 305.

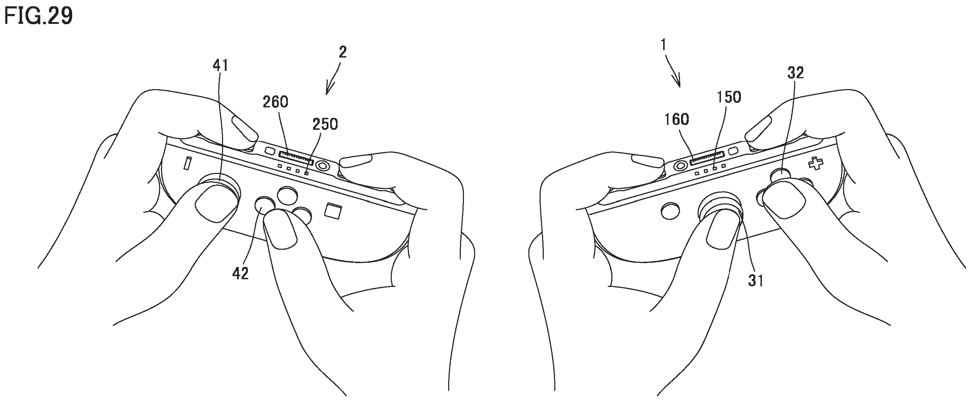

Positional relation between joystick 31 and four buttons 32 in first input device 1 in the horizontally held state is the same as positional relation between joystick 41 and four buttons 42 in second input device 2 (see Fig. 29). Specifically, in the horizontally held state, in first input device 1, joystick 31 is located at the left side of four buttons 32. Similarly, in the horizontally held state, in second input device 2, joystick 41 is located at the left side of four buttons 42. In the horizontally held state, on the other hand, in input device 1, second upper-surface button (right) 130 and first upper-surface button (right) 140 are located at the right side, whereas in second input device 2, second upper-surface button (left) 230 and first upper-surface button (left) 240 are located at the left side.

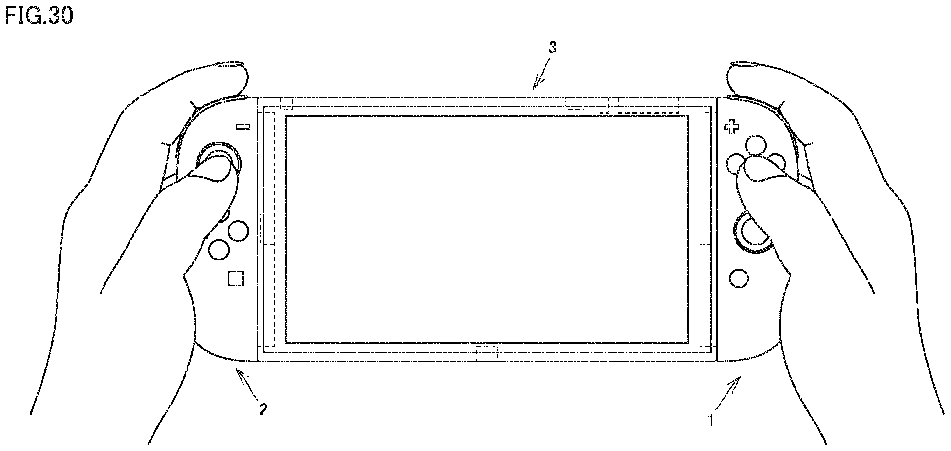

In the integrally held state, joystick 31 in first input device 1 is located at the lower side of four buttons 32, whereas joystick 41 in second input device 2 is located at the upper side of one set of four buttons 42 (Fig. 30). In the integrally held state, on the other hand, second upper-surface button (right) 130 and first upper-surface button (right) 140 of first input device 1 and second upper-surface button (left) 230 and first upper-surface button (left) 240 of second input device 2 are all located at the upper side.

The input device according to the present embodiment can also be defined as an input device set including first input device 1 and second input device 2. First input device 1 is an input device for the right hand including direction input portion 31 on front surface 15 and including first opening 170 in first side surface 11 located at the left side relative to front surface 15. Second input device 2 is an input device for the left hand including direction input portion 41 on a front surface 215 and including first opening 270 in the first side surface located at the right side of front surface 215.

### <Information Processing Apparatus>

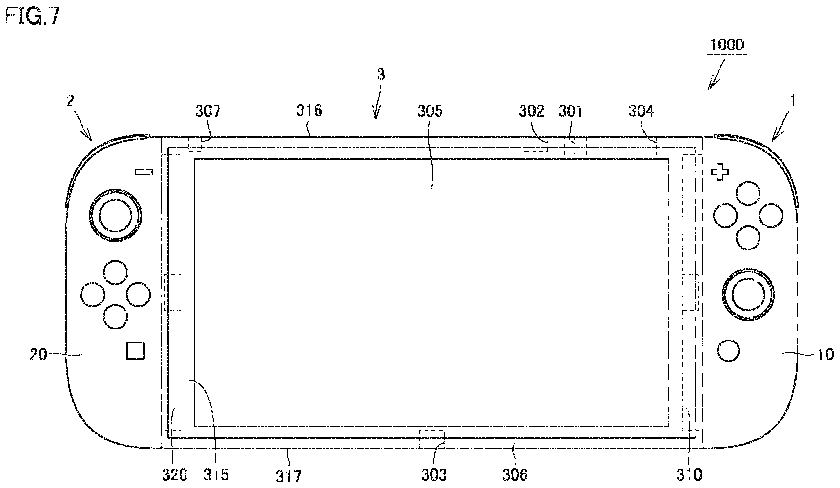

A configuration of an exemplary information processing apparatus 1000 will now be described. Fig. 7 is a schematic front view showing the configuration of exemplary information processing apparatus 1000.

As shown in Fig. 7, information processing apparatus 1000 includes first input device 1, second input device 2, and main body apparatus 3. First input device 1 or second input device 2 is collectively also simply referred to as a game controller below. Main body apparatus 3 is generally in a shape of a parallelepiped, and an upper side surface and a lower side surface are longer than a right side surface and a left side surface. Main body apparatus 3 is capable of performing game processing. The game processing is performed based on an input to the game controller. First input device 1 and second input device 2 are attachable to and removable from main body apparatus 3. In an attached state shown in Fig. 7, input device 1 is attached to the right side surface of main body apparatus 3 and second input device 2 is attached to the left side surface of main body apparatus 3. First input device 1 is fixed to second input device 2 with main body apparatus 3 being interposed. In other words, first input device 1 is indirectly fixed to second input device 2.

In another manner, first input device 1 may indirectly be fixed to second input device 2 with an apparatus different from main body apparatus 3 being interposed. In another manner, first input device 1 may directly be fixed to second input device 2.

Namely, first input device 1 is directly or indirectly fixed to second input device 2. First input device 1 and second input device 2 fixed to each other may be used as an integrated game controller.

While input device 1 is attached to main body apparatus 3, various types of information including information on operations on an input portion are transmitted to a main body first terminal 331 of main body apparatus 3 through first terminal 160 which will be described later and processed in accordance with a program by a central processing unit (CPU) of main body apparatus 3. In a manner of use where the game controller is not attached to main body apparatus 3, the various types of information including information on operations on the input portion are transmitted to the CPU of main body apparatus 3 through a wireless chip included in the game controller and a wireless chip included in main body apparatus 3. Information may be transmitted through the wireless chips also while the game controller is attached to main body apparatus 3. In this case, information processing apparatus 1000 does not have to include at least one of first terminal 160 and main body first terminal 331.

### <Main Body Apparatus>

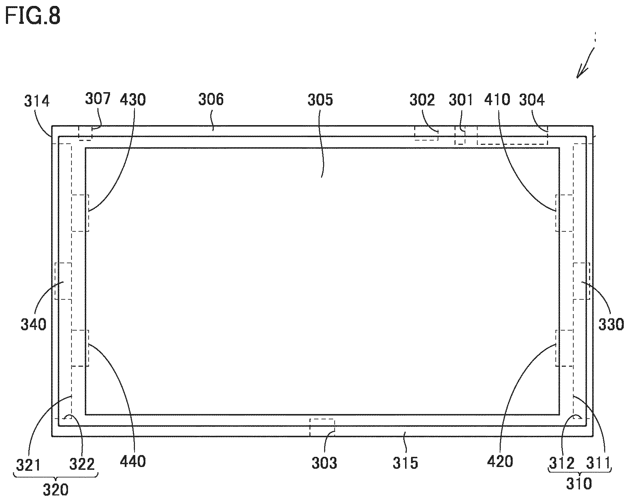

A configuration of exemplary main body apparatus 3 will now be described. Fig. 8 is a schematic front view showing the configuration of exemplary main body apparatus 3. As shown in Fig. 8, main body apparatus 3 includes a main body housing 306, a first plug connector 330, a second plug connector 340, a first magnetic element 410, a second magnetic element 420, a third magnetic element 430, and a fourth magnetic element 440.

Main body apparatus 3 is provided with a recess 310 in a main body right side surface 313. Recess 310 is defined by a first recess bottom surface 311 and a first recess side surface 312. Recess 310 extends in the longitudinal direction of main body right side surface 313. Recess 310 extends along the upward-downward direction of main body right side surface 313. A main body left side surface 314 of main body apparatus 3 is provided with a recess 320. Recess 320 is defined by a second recess bottom surface 321 and a second recess side surface 322. Recess 320 extends in the longitudinal direction of main body left side surface 314. Recess 320 extends along the upward-downward direction of main body left side surface 314 of main body apparatus 3.

As shown in Figs. 7 and 8, first input device 1 is attached to main body apparatus 3 such that projection 100 is matched with recess 310. First input device 1 is attached to main body apparatus 3 such that first side surface 11 of first input device 1 is opposed to main body right side surface 313 of main body apparatus 3 and the longitudinal direction of first side surface 11 of first input device 1 extends along the longitudinal direction of main body right side surface 313 of main body apparatus 3. Similarly, second input device 2 is attached to main body apparatus 3 such that projection 200 is matched with recess 320. Second input device 2 is attached to main body left side surface 314 of main body apparatus 3.

As shown in Fig. 8, a display 305 is provided at a main body front face 315 of main body apparatus 3. Display 305 has a display surface exposed through an opening provided in main body front face 315. Display 305 may be placed on a surface of main body front face 315. Display 305 may be any display apparatus such as a liquid crystal display or an OLED. A touch panel may be provided at the display surface of display 305. Any touch detection method may be adopted for the touch panel. For example, an image obtained or generated by main body apparatus 3 is shown on display 305. The image may be still images or moving images.

Main body apparatus 3 includes an audio input and output terminal 301. Audio input and output terminal 301 is provided at a main body upper side surface 316 of main body apparatus 3. Audio input and output terminal 301 is, for example, a headphone jack. A headphone or a microphone can be attached to audio input and output terminal 301. Main body apparatus 3 may include a volume button adjacent to audio input and output terminal 301. The volume button is a button for giving an instruction for adjustment of a volume of sound outputted from main body apparatus 3.

Main body apparatus 3 includes a lower terminal 303. Lower terminal 303 is provided at a main body lower side surface 317 of main body apparatus 3. Lower terminal 303 may be provided at a center in the left-right direction of main body lower side surface 317. Lower terminal 303 is, for example, a terminal for communication with an external apparatus. Lower terminal 303 implements, for example, a universal serial bus (USB) connector. Main body apparatus 3 may externally be supplied with electric power through lower terminal 303. Main body apparatus 3 may output an image to the outside through lower terminal 303.

Main body apparatus 3 includes an upper terminal 302, a power button 307, and a storage medium slot 304. Upper terminal 302, power button 307, and storage medium slot 304 are provided at main body upper side surface 316. Main body apparatus 3 may perform game processing by executing a game application stored in a storage medium inserted in storage medium slot 304.

As shown in Fig. 8, main body left side surface 314 is located opposite to main body right side surface 313 with respect to the front face of main body apparatus 3. Main body left side surface 314 is similar in configuration to main body right side surface 313. First plug connector 330, first magnetic element 410, and second magnetic element 420 are provided in recess 310. First magnetic element 410 and second magnetic element 420 each include a magnet. In the longitudinal direction of recess 310, first plug connector 330 is arranged between first magnetic element 410 and second magnetic element 420. Similarly, second plug connector 340, third magnetic element 430, and fourth magnetic element 440 are provided in recess 320. Third magnetic element 430 and fourth magnetic element 440 each include a magnet. In the longitudinal direction of recess 320, second plug connector 340 is arranged between third magnetic element 430 and fourth magnetic element 440.

Projection 100 is in a shape that allows mating thereof with each of recess 310 and recess 320. Similarly, projection 200 is in a shape that allows mating thereof with each of recess 310 and recess 320. Recess 310 may substantially be in symmetry in the longitudinal direction thereof. Recess 320 may substantially be in symmetry in the longitudinal direction thereof. Projection 100 may substantially be in symmetry in the longitudinal direction thereof. Projection 200 may substantially be in symmetry in the longitudinal direction thereof.

The longitudinal direction of recess 310 may be in parallel to the longitudinal direction of recess 320. Each of the longitudinal direction of recess 310 and the longitudinal direction of recess 320 may be in parallel to the upward-downward direction. A direction of width of recess 310 may be in parallel to a direction of width of recess 320. Each of the direction of width of recess 310 and the direction of width of recess 320 may be in parallel to the front-rear direction.

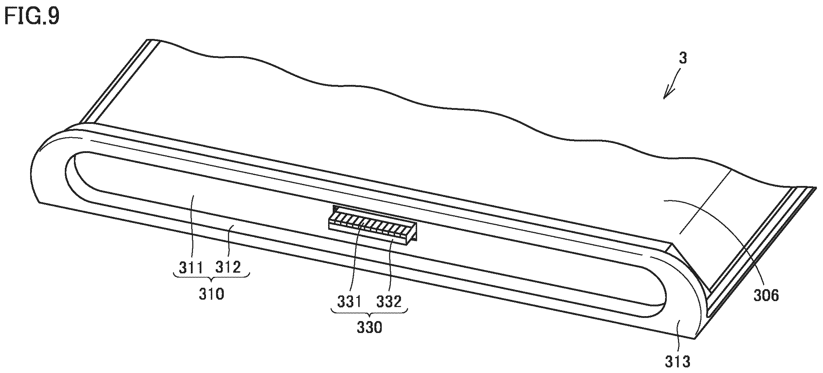

Fig. 9 is a schematic perspective view showing a configuration of the right side surface of main body apparatus 3. Main body apparatus 3 includes a similar configuration also at a side of the left side surface.

As shown in Fig. 9, first plug connector 330 includes a tongue-shaped body 332 and main body first terminal 331. Main body first terminal 331 is provided along a surface of tongue-shaped body 332. Recess 310 is provided in main body right side surface 313 of main body apparatus 3. Recess 310 is a recessed portion in main body right side surface 313. Recess 310 extends in the longitudinal direction of main body right side surface 313. A side at a front face side and a side at a back surface side of first recess bottom surface 311 of recess 310 are each substantially linear and extend substantially in parallel to each other. In the present embodiment, an upper area and a lower area of first recess bottom surface 311 decrease in width toward ends, respectively. More specifically, the upper area and a lower-side area of first recess bottom surface 311 decrease in width as drawing a curve. First magnetic element 410 and second magnetic element 420 are provided not to be exposed at first recess bottom surface 311. For example, first magnetic element 410 and second magnetic element 420 may have one surfaces covered with a cover that forms first recess bottom surface 311.

### <Connection Structure>

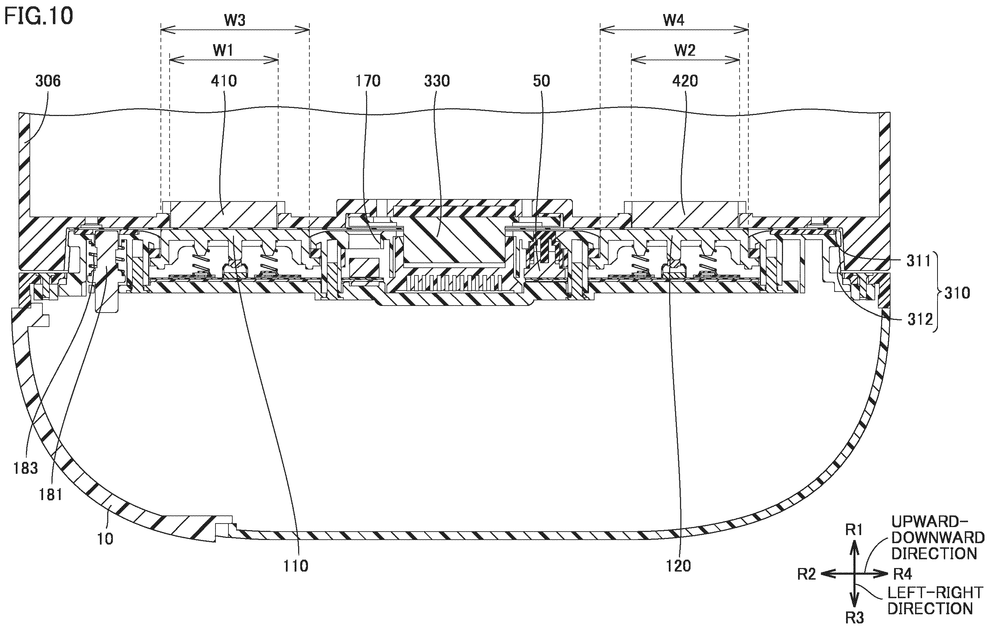

Fig. 10 is a schematic cross-sectional view showing a state in which first input device 1 has been attached to main body apparatus 3. The schematic cross-sectional view shown in Fig. 10 is in parallel to each of the upward-downward direction and the left-right direction.

As shown in Fig. 10, projection 100 of first input device 1 is matched with recess 310 in main body apparatus 3. First side-surface button (right) 110 is to be attracted to first magnetic element 410 by magnetic force. At this time, first side-surface (right) 110 moves in the left direction to come closer to first magnetic element 410. While first side-surface button (right) 110 is attracted to first magnetic element 410, a position of the top surface of first side-surface button (right) 110 in the left-right direction may be the same as a position at a highest height of top surface 106 of projection 100 or at a first direction R1 side relative to the position at the highest height. In the upward-downward direction, a length (a third length W3) of the top surface of first side-surface button (right) 110 may be longer than a length (a first length W1) of first magnetic element 410.

Second side-surface button (right) 120 is to be attracted to second magnetic element 420 by magnetic force. At this time, second side-surface (right) 120 moves in the left direction to come closer to second magnetic element 420. While second side-surface button (right) 120 is attracted to second magnetic element 420, a position of a top surface of second side-surface button (right) 120 in the left-right direction may be the same as the position at the highest height of top surface 106 of projection 100 or at the first direction R1 side relative to the position at the highest height. In the upward-downward direction, a length (a fourth length W4) of the top surface of second side-surface button (right) 120 may be longer than a length (a second length W2) of second magnetic element 420.

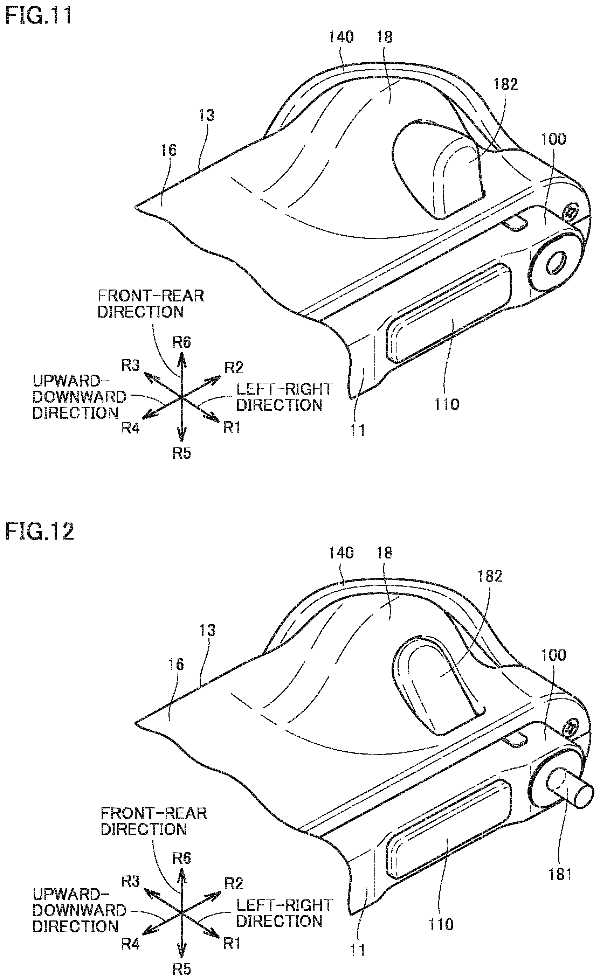

Fig. 11 is a schematic diagram showing a manner before an ejection operation lever is operated. Fig. 12 is a schematic diagram showing a manner while the ejection operation lever is being operated.

As shown in Figs. 10 to 12, first input device 1 includes a pusher 181, an ejection operation lever 182, and a biasing portion 183, which implement a removal mechanism. As the user operates ejection operation lever 182, pusher 181 projects from top surface 106 of projection 100. While first input device 1 is attached to main body apparatus 3, pusher 181 that projects pushes first recess bottom surface 311 of recess 310. As pusher 181 pushes first recess bottom surface 311, top surface 106 of projection 100 moves in a direction away from first recess bottom surface 311. First input device 1 rotates, with an end opposite to an end where pusher 181 is provided being defined as the fulcrum. As set forth above, first input device 1 can readily be removed from main body apparatus 3.

Pusher 181 may project from a portion at the upper side relative to operation portion 182, in the longitudinal direction of projection 100. In the longitudinal direction of projection 100, a center of pusher 181 may be located at the upper side of the center of ejection operation lever 182.

An amount of projection of pusher 181 may be set to magnitude at which the operation surface of first side-surface button (right) 110 moves away from first recess bottom surface 311 as a result of projection of pusher 181. From another point of view, the amount of projection of pusher 181 may be set to magnitude at which even when first side-surface button (right) 110 moves upward to its maximum by attraction to first magnetic element 410, the operation surface of first side-surface button (right) 110 is distant from first recess bottom surface 311. First input device 1 can thus readily be removed from main body apparatus 3. The amount of projection of pusher 181 may be set to magnitude at which at least a part of the operation surface of second side-surface button (right) 120 does not move away from first recess bottom surface 311. Quick removal of first input device 1 from main body apparatus 3 can thus be suppressed.

The amount of projection of pusher 181 may be set to magnitude at which an upper end of top surface 106 of projection 100 (an end on a second direction R2 side in Fig. 11) is exposed through the opening of recess 310 as a result of projection of pusher 181. The amount of projection of pusher 181 may be set to magnitude at which the upper end of top surface 106 is not exposed through the opening of recess 310 in spite of projection of pusher 181. The amount of projection of pusher 181 may be set to magnitude at which light emission portion 150 provided at outer peripheral surface 107 is not exposed through the opening of recess 310 in spite of projection of pusher 181. The amount of projection of pusher 181 may be set to magnitude at which the upper end of first side surface 11 (the end at the second direction R2 side in Fig. 11) and an upper end of main body right side surface 313 are distant from each other, for example, by a distance from 0.5 mm to 1 cm as a result of projection of pusher 181. The distance may be, for example, from 1 mm to 5 mm. The distance may be, for example, 2 mm.

As shown in Figs. 11 and 12, ejection operation lever 182 is provided at rear surface 16. Ejection operation lever 182 is pushed from first side surface 11 toward second side surface 13. More specifically, ejection operation lever 182 pivots in a direction from first side surface 11 toward second side surface 13 and from rear surface 16 toward front surface 15. Rear surface 16 is provided with a raised portion 18. Raised portion 18 is located on the third direction R3 side with respect to ejection operation lever 182. Raised portion 18 is raised in sixth direction R6 at rear surface 16. When ejection operation lever 182 is operated, it moves in third direction R3 and fifth direction R5 and buried in raised portion 18 (Fig. 12).

Ejection operation lever 182 does not have to entirely and completely be buried. A part of ejection operation lever 182 may project from raised portion 18 in a state in which ejection operation lever 182 has been operated to a limit. The highest height of ejection operation lever 182 from rear surface 16 when it is not operated is lower than the highest height of raised portion 18 from rear surface 16. A rear end of ejection operation lever 182 when it is not operated may be located at a front side relative to the rear end of raised portion 18 from rear surface 16. When first input device 1 is placed on surface to be detected F such that first side surface 11 is opposed to surface to be detected F, an end of raised portion 18 is grounded while contact of ejection operation lever 182 with surface to be detected F can be suppressed.

### <First Upper-Surface Button>

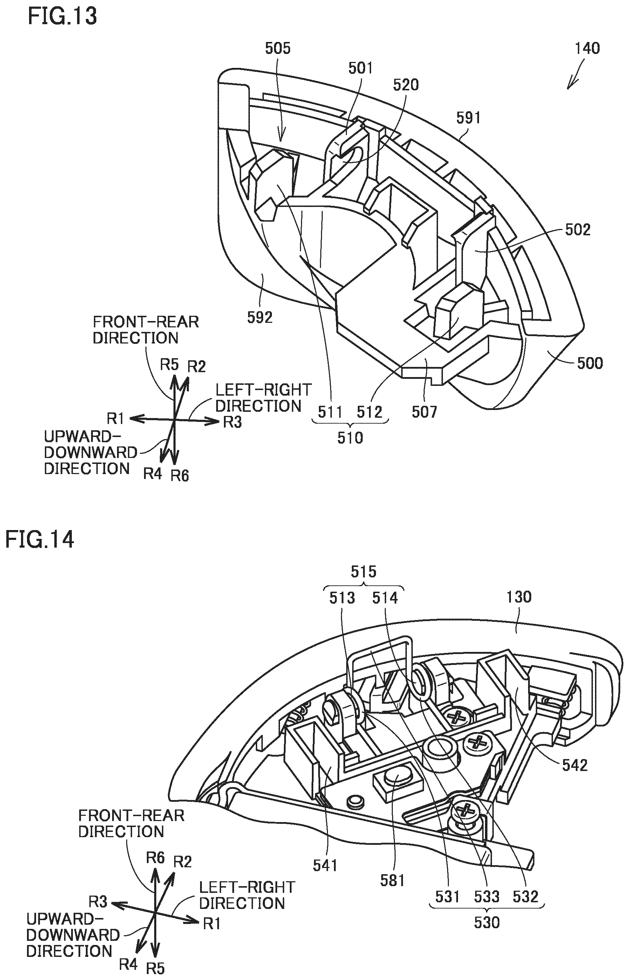

A configuration of first upper-surface button (right) 140 will now be described. Fig. 13 is a schematic perspective view showing the configuration of first upper-surface button (right) 140.

As shown in Fig. 13, first upper-surface button (right) 140 includes a first main body portion 500, a shaft receiver 520, a position displacement prevention rib 510, and a pushing portion 507.

First upper-surface button (right) 140 includes a first plate-shaped portion 501 and a second plate-shaped portion 502. Each of first plate-shaped portion 501 and second plate-shaped portion 502 projects in a direction including a component of fifth direction R5. First plate-shaped portion 501 is arranged as being opposed to second plate-shaped portion 502.

Position displacement prevention rib 510 includes a first rib portion 511 and a second rib portion 512. Each of first rib portion 511 and second rib portion 512 projects from first main body portion 500 in the direction including the component of fifth direction R5.

First main body portion 500 includes a first outer surface 591 and a first inner surface 592. First outer surface 591 includes a surface to be operated by the user. First outer surface 591 is located outside main body housing 10 while first upper-surface button (right) 140 is attached to main body housing 10. First inner surface 592 is located opposite to first outer surface 591. First inner surface 592 is located inside main body housing 10 while first upper-surface button (right) 140 is attached to main body housing 10.

Fig. 14 is a schematic perspective view showing a part of an internal structure of first input device 1. As shown in Fig. 14, first input device 1 includes a first rotation shaft 515, a third biasing portion 530, a first switch 581, a first rib accommodation portion 541, and a second rib accommodation portion 542. First rotation shaft 515 is formed, for example, from a part of main body housing 10. First rotation shaft 515 includes a third shaft 513 and a fourth shaft 514. Fourth shaft 514 is distant from third shaft 513. Fourth shaft 514 and third shaft 513 are located on an identical straight line. A direction of extension of first rotation shaft 515 is also referred to as a first rotation shaft direction below.

First switch 581 is, for example, a tact switch. **In** another manner, first switch 581 may be a rubber switch. First switch 581 may be located near third shaft 513 in the first rotation shaft direction. From another point of view, first switch 581 may be located closer to third shaft 513 than a position intermediate between third shaft 513 and fourth shaft 514.

Third biasing portion 530 biases first upper-surface button (right) 140. Third biasing portion 530 is, for example, a double torsion spring. Third biasing portion 530 includes a first coil spring portion 531, a central connection portion 533, and a second coil spring portion 532. Central connection portion 533 connects first coil spring portion 531 and second coil spring portion 532 to each other. Central connection portion 533 is located between first coil spring portion 531 and second coil spring portion 532. First coil spring portion 531 is attached to third shaft 513. Second coil spring portion 532 is attached to fourth shaft 514.

Each of first rib accommodation portion 541 and second rib accommodation portion 542 is formed, for example, from a part of main body housing 10. Each of first rib accommodation portion 541 and second rib accommodation portion 542 extends in the front-rear direction. When viewed in the front-rear direction, each of first rib accommodation portion 541 and second rib accommodation portion 542 is substantially in a C shape. From another point of view, each of first rib accommodation portion 541 and second rib accommodation portion 542 opens at a part thereof in a peripheral direction.

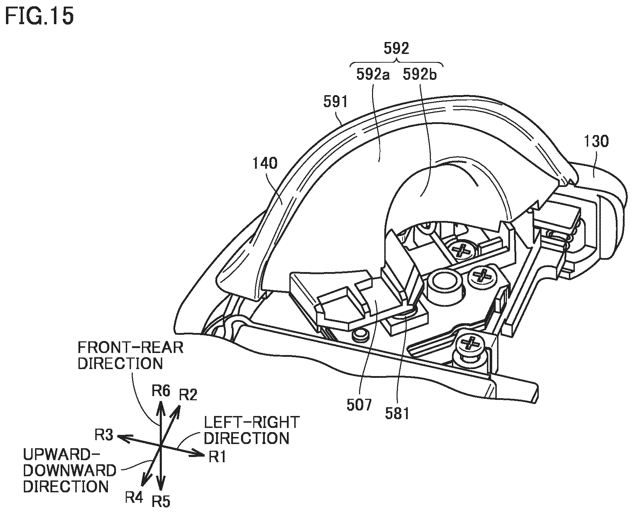

Fig. 15 is a schematic perspective view showing a state in which first upper-surface button (right) 140 has been attached to the configuration shown in Fig. 14. As shown in Fig. 15, first inner surface 592 includes a first side surface area 592a and a second side surface area 592b. Second side surface area 592b is contiguous to first side surface area 592a. Second side surface area 592b is recessed more than first side surface area 592a. Second side surface area 592b is recessed toward first outer surface 591. A part of ejection operation lever 182 may be arranged in a recess defined by second side surface area 592b when ejection operation lever 182 is operated (see Fig. 12).

As shown in Fig. 15, first upper-surface button (right) 140 includes pushing portion 507. Pushing portion 507 is contiguous to first side surface area 592a. Pushing portion 507 projects from first side surface area 592a. Pushing portion 507 is arranged over first switch 581.

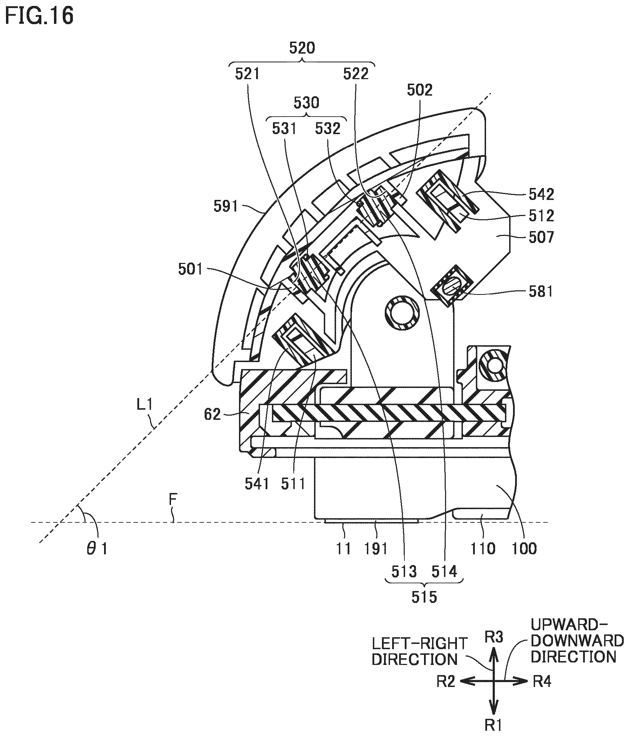

Fig. 16 is a first schematic cross-sectional view showing a part of the internal structure of the first input device. The cross-section shown in Fig. 16 is a cross-section viewed from the rear when first input device 1 is placed on surface to be detected F and is in parallel to the upward-downward direction and the left-right direction. As shown in Fig. 16, first rib portion 511 is accommodated in first rib accommodation portion 541. Second rib portion 512 is accommodated in second rib accommodation portion 542. Each of first rib portion 511 and second rib portion 512 extends in a direction substantially perpendicular to the direction of extension of first rotation shaft 515. **In** the direction of extension of first rotation shaft 515, third shaft 513 is located between first rib portion 511 and fourth shaft 514. **In** the direction of extension of first rotation shaft 515, fourth shaft 514 is located between second rib portion 512 and third shaft 513.

As shown in Fig. 16, first rotation shaft 515 extends in a direction including a component in the left-right direction. Specifically, first rotation shaft 515 extends in the direction including a component in the left-right direction and a component in the upward-downward direction. The direction of extension of first rotation shaft 515 may be in parallel to the left-right direction or may be inclined with respect to the left-right direction. The direction of extension of first rotation shaft 515 is inclined, for example, with respect to each of the left-right direction and the upward-downward direction.

Shaft receiver 520 includes a first shaft receiving portion 521 and a second shaft receiving portion 522. First shaft receiving portion 521 is a notch provided in first plate-shaped portion 501. Second shaft receiving portion 522 is a notch provided in second plate-shaped portion 502. Second shaft receiving portion 522 is arranged as being opposed to first shaft receiving portion 521. Third shaft 513 is arranged at first shaft receiving portion 521. First shaft receiving portion 521 rotatably supports third shaft 513. Fourth shaft 514 is arranged at second shaft receiving portion 522. Second shaft receiving portion 522 rotatably supports fourth shaft 514.

As shown in Fig. 16, first rotation shaft 515 may be configured to be oriented in a direction inclined toward the lower side of first input device 1 with respect to the direction perpendicular to surface to be detected F when first side surface 11 is placed on surface to be detected F. An angle formed between surface to be detected F and first rotation shaft 515 when first side surface 11 is placed on surface to be detected F is defined as a first angle θ1. First angle θ1 corresponds to an angle formed between a first straight line L1 along first rotation shaft 515 and surface to be detected F. First angle θ1 is, for example, 45°. In one certain manner, first angle θ1 may be smaller than 45°. In another manner, first angle θ1 may be larger than 45°. First angle θ1 is an acute angle larger than 0 and smaller than 90°. In another manner, first angle θ1 may be 90°.

First rotation shaft 515 may extend along a plane direction in parallel to front surface 15. In the present embodiment, first rotation shaft 515 extends along a plane direction perpendicular to the front-rear direction. From another point of view, first rotation shaft 515 extends in a direction in parallel to a plane direction in which second upper-surface button (right) 130 is movable. In another manner, first rotation shaft 515 may extend along a plane direction inclined with respect to the plane perpendicular to the front-rear direction. In other words, first rotation shaft 515 may extend along a plane inclined with respect to a plane in parallel to each of the upward-downward direction and the left-right direction.

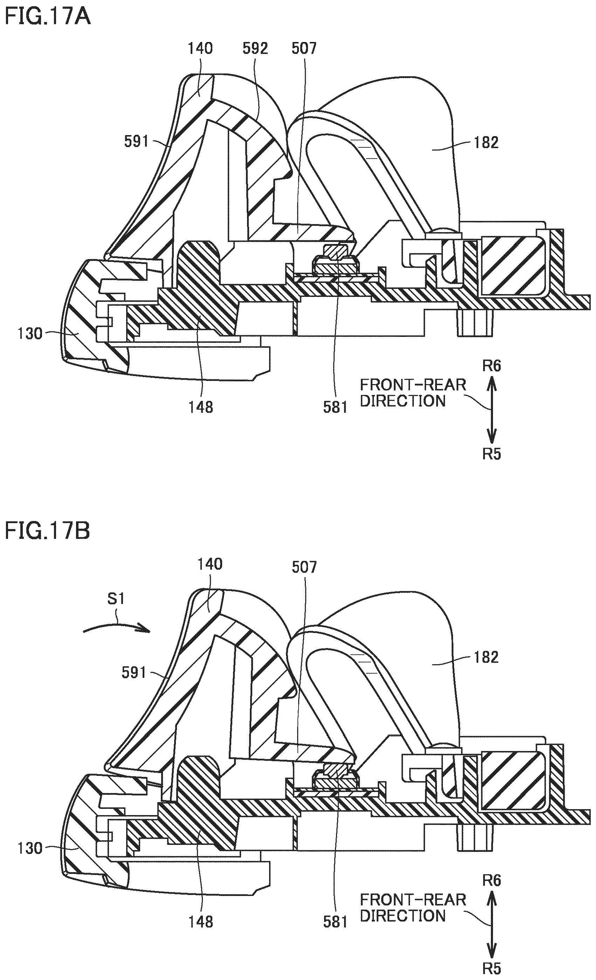

Fig. 17A is a schematic cross-sectional view showing positional relation between first upper-surface button (right) 140 and first switch 581 before the user operates first upper-surface button (right) 140. The cross-section shown in Fig. 17A is perpendicular to the direction of extension of first rotation shaft 515. As shown in Fig. 17A, before the user operates first upper-surface button (right) 140, pushing portion 507 of first upper-surface button (right) 140 is not pressing down first switch 581. Pushing portion 507 may be distant from first switch 581. Before the user operates first upper-surface button (right) 140, input to first switch 581 should only be absent and pushing portion 507 may be in contact with first switch 581.

Fig. 17B is a schematic cross-sectional view showing positional relation between first upper-surface button (right) 140 and first switch 581 after the user operated first upper-surface button (right) 140. The cross-section shown in Fig. 17B is perpendicular to the direction of extension of first rotation shaft 515. As shown in Fig. 17B, after the user operated first upper-surface button (right) 140, pushing portion 507 of first upper-surface button (right) 140 presses down first switch 581. Pushing portion 507 comes in contact with first switch 581. After the user operated first upper-surface button (right) 140, input is provided to first switch 581. As a result of application of load equal to or larger than a certain threshold value to first switch 581, first switch 581 is turned on.

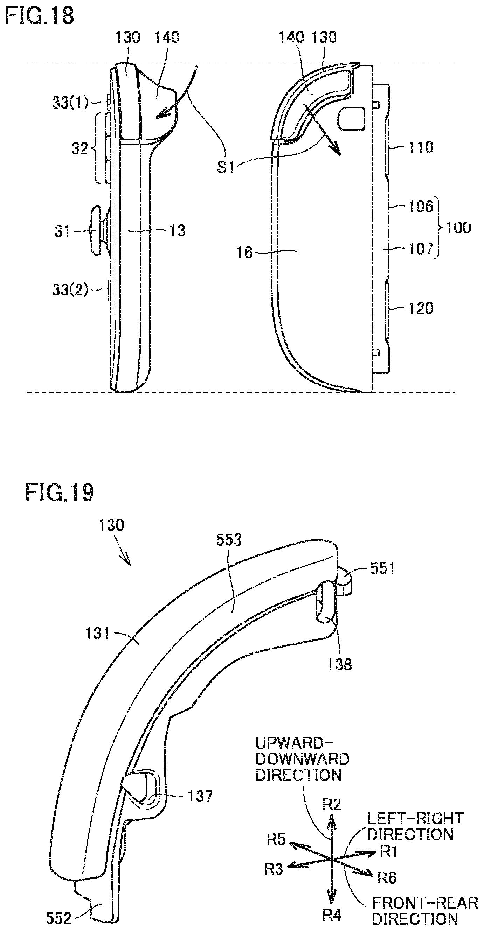

Fig. 18 is a schematic right side view and a schematic rear view showing a direction of pressing down of the first upper-surface button (right). First upper-surface button (right) 140 is pressed down by the user. A direction of pressing down (a direction S1 of a first arrow) of first upper-surface button (right) 140 includes a component in a direction from upper surface 12 toward lower surface 14. The direction of pressing down (direction S1 of the first arrow) of first upper-surface button (right) 140 includes a component in a front direction, a component in a downward direction, and a component in the left direction. First upper-surface button (right) 140 is configured to be pressed down with first rotation shaft 515 being defined as the center. First upper-surface button (right) 140 pivots around first rotation shaft 515 by being pressed down by the user. Though a movable angle of first upper-surface button (right) 140 is not particularly limited, it may be, for example, not larger than 20°, not larger than 15°, or not larger than 10°.

First upper-surface button (right) 140 is biased by third biasing portion 530. As the user releases first upper-surface button (right) 140, first upper-surface button (right) 140 returns to an original position. Pushing portion 507 of first upper-surface button (right) 140 may move away from first switch 581. Input to first switch 581 thus ends and first switch 581 is turned off.

Input device 1 according to the present embodiment includes first upper-surface button (right) 140. Therefore, in a first state of use in which front surface 15 faces front and upper surface 12 faces up, input device 1 can be used like a game controller. First upper-surface button (right) 140 is configured to be pressed down around first rotation shaft 515 that extends in the direction including the component in the left-right direction. Therefore, in the first state of use, in using first upper-surface button (right) 140 as a shoulder button, the first upper-surface button (right) is readily pressed down downward with a forefinger or a middle finger.

Furthermore, input device 1 according to the present embodiment includes mouse operation sensor 174. Therefore, in a second state of use in which input device 1 is placed on surface to be detected F with first side surface 11 facing down, input device 1 can be used as the mouse. In other words, the user can use input device 1 as the mouse by moving input device 1 over surface to be detected F with first side surface 11 being opposed to surface to be detected F. At this time, first upper-surface button (right) 140 can be used like a click button. First rotation shaft 515 extends in the direction away from surface to be detected F. Therefore, since first upper-surface button (right) 140 can be pressed down toward below with the forefinger or the middle finger as in the first state of use, operation of input device 1 is easy. In other words, according to input device 1 according to the present embodiment, use like the game controller and use as the mouse can be made. Furthermore, since first upper-surface button (right) 140 rotates around first rotation shaft 515, operability as the shoulder button is good in use as the game controller and operability as the click button is not impaired also in use as the mouse. Input device 1 may be free standing on surface to be detected F without support by the user, with first side surface 11 facing down.

Furthermore, first rotation shaft 515 may be configured to be oriented in the direction inclined toward the lower side of input device 1 with respect to the direction perpendicular to surface to be detected F while first side surface 11 is placed on surface to be detected F. Since first upper-surface button (right) 140 can be pressed down in the direction toward surface to be detected F in an operation as the mouse, a click operation is facilitated.

Furthermore, the acute angle formed between surface to be detected F and first rotation shaft 515 when first side surface 11 is placed on surface to be detected F may be larger than 45°. In holding input device 1 in a lifted-up state, first upper-surface button (right) 140 is thus more readily pushed. Since a hand is placed as putting a finger over the upper surface in order to push first upper-surface button (right) 140 in operating input device 1 as the mouse, first upper-surface button (right) 140 can readily be pressed down by bending the finger even when the acute angle is larger than fortyfive degrees.

The angle formed between surface to be detected F and first rotation shaft 515 when first side surface 11 is placed on surface to be detected F may be 45°. Thus, in any case of holding of input device 1 in the lifted-up state and the operation of input device 1 as the mouse, first upper-surface button (right) 140 is readily pushed.

First rotation shaft 515 may extend along the plane direction perpendicular to surface to be detected F. In operating input device 1 as the mouse, first upper-surface button (right) 140 is thus readily pushed.

### <Second Upper-Surface Button>

A configuration of second upper-surface button (right) 130 will now be described. Fig. 19 is a schematic perspective view showing the configuration of second upper-surface button (right) 130.

As shown in Fig. 19, second upper-surface button (right) 130 includes a second main body portion 553, a first flange portion 551, a second flange portion 552, and a second outer surface 131. Second main body portion 553 is provided with a first shaft hole 138 and a second shaft hole 137. Second shaft hole 137 is distant from first shaft hole 138. First shaft hole 138 and second shaft hole 137 are provided in a side surface different from second outer surface 131. First shaft hole 138 is, for example, a through hole. First shaft hole 138 may be a bottomed hole. Second shaft hole 137 is, for example, a through hole. Second shaft hole 137 may be a bottomed hole.

Second outer surface 131 is a surface to be operated by the user. Second outer surface 131 is curved as projecting convexly outward. Second outer surface 131 is formed from second main body portion 553. First flange portion 551 is provided at one side of second main body portion 553. Second flange portion 552 is provided at the other side of second main body portion 553. Second main body portion 553 is located between first flange portion 551 and second flange portion 552.

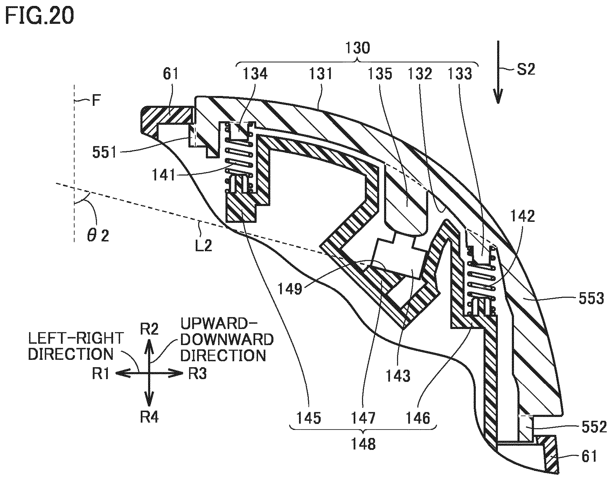

Fig. 20 is a second schematic cross-sectional view showing a part of the internal structure of first input device 1. The cross-section shown in Fig. 20 is in parallel to the upward-downward direction and the left-right direction. As shown in Fig. 20, input device 1 includes a first biasing member 141, a second biasing member 142, and a second switch 143. Second upper-surface button (right) 130 includes a second inner surface 132, a third protrusion 133, a fourth protrusion 134, and a fifth protrusion 135. When viewed in the front-rear direction, second outer surface 131 is, for example, in an arc shape. Second inner surface 132 is located opposite to second outer surface 131. First input device 1 includes an internal component 148. Second inner surface 132 is opposed to internal component 148.

Third protrusion 133 is provided at second inner surface 132. Third protrusion 133 protrudes from second inner surface 132 in fourth direction R4. Fourth protrusion 134 is provided at second inner surface 132. Fourth protrusion 134 protrudes from second inner surface 132 in fourth direction R4. In the left-right direction, fourth protrusion 134 is located at the first direction R1 side relative to third protrusion 133.

Fifth protrusion 135 is provided at second inner surface 132. Fifth protrusion 135 protrudes from second inner surface 132 in fourth direction R4. In the left-right direction, fifth protrusion 135 is located at the first direction R1 side relative to third protrusion 133 and at the third direction R3 side relative to fourth protrusion 134. In the left-right direction, fifth protrusion 135 is located between third protrusion 133 and fourth protrusion 134. In the upward-downward direction, fifth protrusion 135 may be longer in length than third protrusion 133. In the upward-downward direction, fifth protrusion 135 may be longer in length than fourth protrusion 134. In the upward-downward direction, fifth protrusion 135 may be located between third protrusion 133 and fourth protrusion 134.

First biasing member 141 biases second upper-surface button (right) 130 upward. First biasing member 141 is, for example, a coil spring. First biasing member 141 is supported by internal component 148. First biasing member 141 extends, for example, along the upward-downward direction. First biasing member 141 has an end at the second direction R2 side attached, for example, to fourth protrusion 134. First biasing member 141 has an end at the fourth direction R4 side attached, for example, to a first portion 145 of internal component 148.

Second biasing member 142 biases second upper-surface button (right) 130 upward. Second biasing member 142 is, for example, a coil spring. Second biasing member 142 is supported by internal component 148. Second biasing member 142 extends, for example, along the upward-downward direction. Second biasing member 142 has an end at the second direction R2 side attached, for example, to third protrusion 133. Second biasing member 142 has an end at the fourth direction R4 side attached, for example, to a second portion 146 of internal component 148.

In the left-right direction, second biasing member 142 is located at the third direction R3 side relative to first biasing member 141. In the left-right direction, fifth protrusion 135 is located between second biasing member 142 and first biasing member 141. In the upward-downward direction, second biasing member 142 is located at the fourth direction R4 side relative to first biasing member 141. In the upward-downward direction, fifth protrusion 135 may be located between second biasing member 142 and first biasing member 141.

Second upper-surface button (right) 130 is configured to be pushed in in a linear direction. Specifically, second upper-surface button (right) 130 is configured to be pushed in in a direction S2 of a second arrow. Direction S2 of the second arrow is, for example, fourth direction R4. First biasing member 141 and second biasing member 142 bias second upper-surface button (right) 130 upward. Therefore, when the user stops pushing in of second upper-surface button (right) 130, second upper-surface button (right) 130 moves in second direction R2. In other words, according to the configuration, second upper-surface button (right) 130 can be moved along the upward-downward direction. Second upper-surface button (right) 130 may be configured to be pushed in along a straight line along the upward-downward direction or may be configured to be pushed in along a straight line inclined with respect to the upward-downward direction.

Second switch 143 is activated by pressing down of second upper-surface button (right) 130. Second switch 143 is, for example, a tact switch. In another manner, second switch 143 may be, for example, a rubber switch. Second switch 143 is pushed by second upper-surface button (right) 130.

Second switch 143 is supported by a third portion 147 of internal component 148. Second switch 143 is arranged, for example, as being in contact with fifth protrusion 135. As the user presses down second upper-surface button (right) 130, second upper-surface button (right) 130 presses down second switch 143. Fifth protrusion 135 of second upper-surface button (right) 130 presses down second switch 143. Input is thus provided to second switch 143. As a result of application of load equal to or larger than a certain threshold value to second switch 143, second switch 143 is turned on.

As the user releases second upper-surface button (right) 130, each of first biasing member 141 and second biasing member 142 pushes up second button 32(2). Second upper-surface button (right) 130 thus returns to the original position. Fifth protrusion 135 of second upper-surface button (right) 130 may move away from second switch 143. Input to second switch 143 thus ends and second switch 143 is turned off.

In the left-right direction, second switch 143 is located, for example, between first biasing member 141 and second biasing member 142. In the left-right direction, second switch 143 is located between third protrusion 133 and fourth protrusion 134. In the upward-downward direction, second switch 143 is located between fifth protrusion 135 and third portion 147 of internal component 148.

As shown in Fig. 20, third portion 147 is provided with a support surface 149 of second switch 143. Support surface 149 is a surface where third portion 147 supports second switch 143. As shown in Figs. 5 and 20, support surface 149 of second switch 143 is configured to be oriented in the direction inclined toward the lower side of input device 1 with respect to the direction perpendicular to surface to be detected F when first side surface 11 is placed on surface to be detected F. An angle formed between surface to be detected F and support surface 149 when first side surface 11 is placed on surface to be detected F is a second angle θ2. Second angle θ2 corresponds to an angle formed between a second straight line L2 along support surface 149 and surface to be detected F. Second angle θ2 may be, for example, larger than 45°. Second angle θ2 may be, for example, not smaller than 60° or not smaller than 65°. Second angle θ2 may be smaller than 90°. Though second angle θ2 is not particularly limited, it may be, for example, not larger than 85° or not larger than 80°.

First flange portion 551 is opposed to an inner wall of front-surface-side housing 61. First flange portion 551 is prevented from coming off by the inner wall of front-surface-side housing 61. In the upward-downward direction, second flange portion 552 is located at the fourth direction R4 side relative to first flange portion 551. Second flange portion 552 is opposed to the inner wall of front-surface-side housing 61. Second flange portion 552 is prevented from coming off by the inner wall of front-surface-side housing 61.

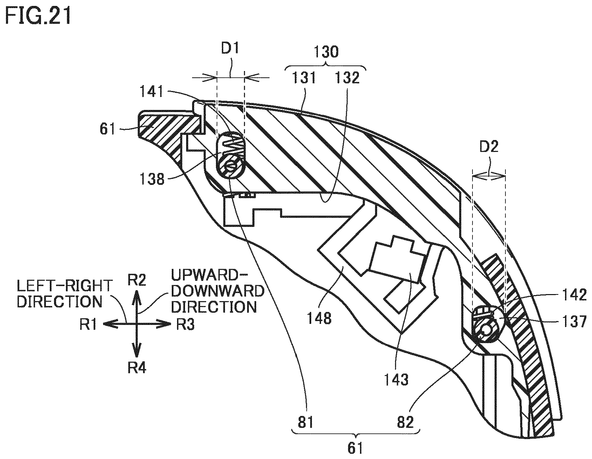

Fig. 21 is a third schematic cross-sectional view showing a part of the internal structure of the first input device. The schematic cross-sectional view shown in Fig. 21 is a schematic cross-sectional view in parallel to each of the upward-downward direction and the left-right direction, at a front surface side as compared with the schematic cross-sectional view shown in Fig. 21.

First input device 1 includes a first shaft 81 and a second shaft 82. First shaft 81 (a second rotation shaft 81) extends, for example, along a direction including a component in the front-rear direction. A direction of extension of first shaft 81 may be in parallel to the front-rear direction or may be inclined with respect to the front-rear direction. From another point of view, first shaft 81 extends in a direction in parallel to surface to be detected F when first side surface 11 or second side surface 13 is placed on surface to be detected F. Second shaft 82 extends, for example, along the direction including the component in the front-rear direction. The direction of extension of first shaft 81 may be in parallel to a direction of extension of second shaft 82. In the left-right direction, each of first shaft 81 and second shaft 82 is provided between first side surface 11 and second side surface 13. In the left-right direction, first shaft 81 is provided between first side surface 11 and second shaft 82. In the left-right direction, second shaft 82 is provided between first shaft 81 and second side surface 13. Each of first shaft 81 and second shaft 82 is formed, for example, from front-surface-side housing 61. Though first shaft 81 and second shaft 82 are equal to each other in diameter in the present embodiment, they may be different from each other in diameter. For example, first shaft 81 may be larger in diameter than second shaft 82.

As shown in Fig. 21, first shaft 81 is arranged in first shaft hole 138. Second shaft 82 is arranged in second shaft hole 137. As shown in Fig. 21, when viewed in the front-rear direction, first shaft 81 is superimposed on first biasing member 141. When viewed in the front-rear direction, second shaft 82 is superimposed on second biasing member 142. A width of first shaft hole 138 in the left-right direction is defined as a first shaft hole width D1. A width of second shaft hole 137 in the left-right direction is defined as a second shaft hole width D2. Second shaft hole width D2 is larger than first shaft hole width D1. In the upward-downward direction, the width of second shaft hole 137 is larger than the diameter of second shaft 82. Second upper-surface button (right) 130 is thus configured to pivot around first shaft 81. Since there is second shaft hole 137, movement of second upper-surface button (right) 130 can be delimited to some extent even when second upper-surface button (right) 130 is in a shape elongated in the left-right direction. Furthermore, in the upward-downward direction, since the width of first shaft hole 138 is larger than the diameter of first shaft 81 and the width of second shaft hole 137 is larger than the diameter of second shaft 82, second upper-surface button (right) 130 can be pushed in in the linear direction.

Second shaft hole 137 is provided opposite to first side surface 11 in the left-right direction with respect to first shaft hole 138. Specifically, in the left-right direction, second shaft hole 137 is provided between first shaft hole 138 and second side surface 13. In the left-right direction, first shaft hole 138 is provided between first side surface 11 and second shaft hole 137.

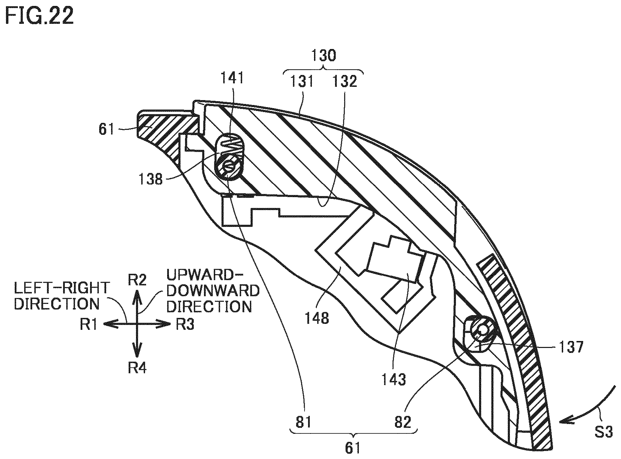

Fig. 22 is a schematic cross-sectional view showing a state in which second upper-surface button (right) 130 pivots around first shaft 81. As shown in Fig. 22, second upper-surface button (right) 130 is configured to pivot around first shaft 81. Second upper-surface button (right) 130 is pressed down by the user. Second upper-surface button (right) 130 is pressed down in a direction S3 of a third arrow. Direction S3 of the third arrow includes a component in the left direction and a component in the downward direction. Second upper-surface button (right) 130 pivots around first shaft 81 (second rotation shaft 81) by being pressed down by the user. A movable angle of second upper-surface button (right) 130 may be, for example, not larger than 20°, not larger than 15°, or not larger than 10°.

As set forth above, second upper-surface button (right) 130 is configured to be pushed in in the linear direction and is configured to pivot around first shaft 81. First shaft 81 is configured to be moved in first shaft hole 138 in the upward-downward direction. Second shaft 82 is configured to be moved in second shaft hole 137 in the upward-downward direction. When second upper-surface button (right) 130 moves in the linear direction, first shaft 81 moves in first shaft hole 138 in the upward-downward direction and second shaft 82 moves in second shaft hole 137 in the upward-downward direction. When second upper-surface button (right) 130 pivots, second shaft 82 moves in second shaft hole 137 in the left-right direction while first shaft 81 is in a standstill in first shaft hole 138. While second upper-surface button (right) 130 moves in the linear direction, it can also pivot at the same time.

Though an example in which second upper-surface button (right) 130 is provided with first shaft hole 138 and second shaft hole 137 is described above, the present disclosure is not limited to this manner. For example, second upper-surface button (right) 130 may be provided with first shaft 81 and second shaft 82. In this case, front-surface-side housing 61 is provided with first shaft hole 138 where first shaft 81 is to be arranged and second shaft hole 137 where second shaft 82 is to be arranged.

In another manner, second upper-surface button (right) 130 may be provided with first shaft 81 and second shaft hole 137. In this case, front-surface-side housing 61 is provided with first shaft hole 138 where first shaft 81 is to be arranged and second shaft 82 to be arranged in second shaft hole 137.

In yet another manner, second upper-surface button (right) 130 may be provided with first shaft hole 138 and second shaft 82. In this case, front-surface-side housing 61 is provided with first shaft 81 to be arranged in first shaft hole 138 and second shaft hole 137 where second shaft 82 is to be arranged.

In other words, second upper-surface button (right) 130 may be provided with one of first shaft hole 138 and first shaft 81 to be arranged in first shaft hole 138 and one of second shaft hole 137 and second shaft 82 to be arranged in second shaft hole 137. Input device 1 other than second upper-surface button (right) 130 may be provided with the other of first shaft hole 138 and first shaft 81 and the other of second shaft hole 137 and second shaft 82. Input device 1 other than second upper-surface button (right) 130 may be front-surface-side housing 61, internal component 148, or another member.

Fig. 23 is a schematic cross-sectional view showing a configuration around second upper-surface button (right) 130 with first upper-surface button (right) 140 having been removed. As shown in Fig. 23, first shaft 81 may be a part of front-surface-side housing 61. First shaft 81 extends along the front-rear direction. In the front-rear direction, first shaft 81 is located between first biasing member 141 and front surface 15. While the user is not operating second upper-surface button (right) 130, second upper-surface button (right) 130 is biased toward second direction R2. Second upper-surface button (right) 130 is prevented from coming off by contact of a lower end of first shaft 81 with a surface that defines first shaft hole 138 in second upper-surface button (right) 130 in the upward-downward direction.

As shown in Fig. 23, internal component 148 is located between front-surface-side housing 61 and rear-surface-side housing 62. Second upper-surface button (right) 130 may lie between front-surface-side housing 61 and rear-surface-side housing 62. In the front-rear direction, first biasing member 141 is located between front-surface-side housing 61 and rear-surface-side housing 62.

### <State of Use>

Fig. 24 is a schematic perspective view showing a state in which input device 1 is vertically held. As shown in Fig. 24, the user holds first input device 1 with the right hand and holds second input device 2 with the left hand. The user can operate first upper-surface button (right) 140 and second upper-surface button (right) 130 with the right forefinger. The user may operate first upper-surface button (right) 140 and second upper-surface button (right) 130 with the right middle finger. The user can operate the input portion at the front face with the right thumb. For example, the user can operate joystick 31, + button 33(1), and one set of four buttons 32 with the thumb. First upper-surface button (left) 240, second upper-surface button (left) 230, joystick 41, - button 43(1), and one set of four buttons 42 are operated with the left hand of the user, similarly to the right hand of the user.

First upper-surface button (right) 140 of input device 1 according to the present embodiment is readily pressed down by being pivoted rearward. Second upper-surface button (right) 130, on the other hand, is configured to be pushed in in a downward linear direction or in a pivot direction around the rotation shaft that extends in the front-rear direction. Therefore, second upper-surface button (right) 130 is readily operated with a space being saved in the front-rear direction. From a point of view of the pivot direction, since first upper-surface button (right) 140 is located at the rear of second upper-surface button (right) 130, it is physically difficult to pivot second upper-surface button (right) 130 rearward. It may be difficult, on the other hand, to perform an operation to pivot second upper-surface button (right) 130 forward. In the present embodiment, second upper-surface button (right) 130 is configured to pivot around the second rotation shaft that extends in the front-rear direction. Pressing down by pivot of second upper-surface button (right) 130 with the space being saved can thus be achieved.

According to input device 1 according to the present embodiment, in the front-rear direction, the length from first side surface 11 to the rear end of rear surface 16 located opposite to front surface 15 may be longer than the length from first side surface 11 to the front end of front surface 15. Since the direction input portion is located at front surface 15, the amount of projection (thickness) from first side surface 11 can be suppressed in consideration of ease in grip or operability in holding of input device 1 as the controller in the lifted-up state. Rear surface 16, on the other hand, projects toward rear surface 16 so that input device 1 is readily held with a finger that reaches the rear. By setting the length in the front-rear direction of first side surface 11 itself to be shorter (in front relative to the rear end of rear surface 16), ease in holding of input device 1 is good if input device 1 can be gripped, for example, also together with first side surface 11 when it is held as the controller in the lifted-up state.

According to input device 1 according to the present embodiment, a rear end edge of the operation surface at the time when second upper-surface button (right) 130 is fully pushed in is located in the upward-downward direction, as high as or above a front end edge of the operation surface of first upper-surface button (right) 140 located at the rear. Since second upper-surface button (right) 130 is in a shape small in width, a finger that extends off the button when it is pushed in may push first upper-surface button (right) 140. Even when the second upper-surface button (right) is pushed in to its maximum, the operation surface of second upper-surface button (right) 130 is located as high as or above the operation surface of first upper-surface button (right) 140 and hence a wrong operation is suppressed.

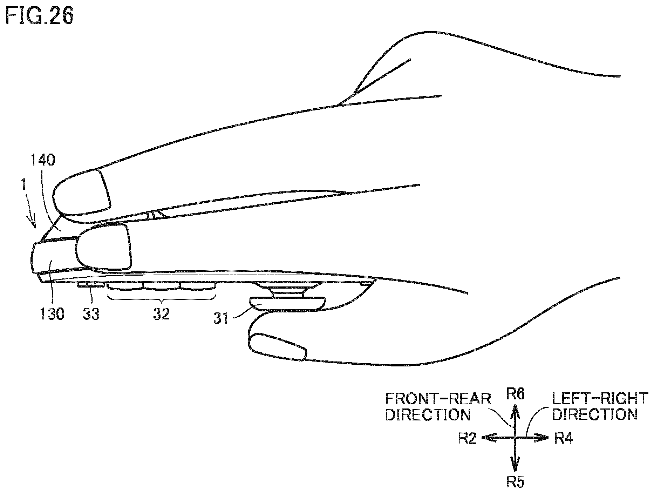

Fig. 25 is a schematic front view showing a state of use of input device 1 as the mouse. Fig. 26 is a schematic side view showing the state of use of input device 1 as the mouse.

As shown in Figs. 25 and 26, the user's palm is arranged to cover second side surface 13 of input device 1. The right thumb of the user is arranged at the side of front surface 15. For example, the right thumb of the user is put along joystick 31. The right forefinger of the user is arranged on second upper-surface button (right) 130. The right middle finger of the user is arranged on first upper-surface button (right) 140.

The user can operate second upper-surface button (right) 130 with his/her right forefinger. The user can operate first upper-surface button (right) 140 with his/her right middle finger. The user may operate first upper-surface button (right) 140 with his/her right forefinger. The user can operate an input portion at the front face with his/her right thumb. For example, the user can operate with his/her thumb, joystick 31, + button 33 (1), and one set of four buttons 32. Second input device 2 may also similarly be used as the mouse with the left hand.

Input device 1 according to the present embodiment includes first upper-surface button (right) 140 and second upper-surface button (right) 130 provided in front of first upper-surface button (right) 140. Both of first upper-surface button (right) 140 and second upper-surface button (right) 130 are thus readily operated when input device 1 is held in the lifted-up state. Furthermore, when input device 1 is operated as the mouse with first side surface 11 facing down, first upper-surface button (right) 140 and second upper-surface button (right) 130 can be operated, for example, like a right click button and a left click button, respectively. Processing performed as a result of operation of first upper-surface button (right) 140 and second upper-surface button (right) 130 may be determined by an application to be executed by information processing apparatus 1000, and the processing may be different or the same. The processing does not have to be performed even when one of the buttons is operated.

In the present embodiment, first opening 170 is located between first side-surface button (right) 110 and second side-surface button (right) 120 in the longitudinal direction of top surface 106 of projection 100. In other words, first opening 170 is located relatively closer to the center in the longitudinal direction of input device 1. Therefore, operation as the mouse in accordance with the user's intention is facilitated.

According to input device 1 according to the present embodiment, support surface 149 of the switch activated by pressing down of second upper-surface button (right) 130 may be inclined toward the lower side of input device 1 with respect to the direction perpendicular to surface to be detected F. Therefore, in use of input device 1 as the mouse, operation of second upper-surface button (right) 130 is facilitated.

According to input device 1 according to the present embodiment, the acute angle formed between surface to be detected F and support surface 149 may be larger than 45° or equal to or larger than 60°. In an example where the angle is excessively small, when second upper-surface button (right) 130 is pressed with the finger from above while input device 1 is held as the controller in the lifted-up state, second upper-surface button (right) 130 may laterally slip with respect to the switch. By setting a relatively large angle, lateral slip of second upper-surface button (right) 130 with respect to the switch can be suppressed. When input device 1 is operated as the mouse, second upper-surface button (right) 130 is not necessarily pressed down only from the direction perpendicular to surface to be detected F but can also be pushed downward (that is, in parallel to surface to be detected F) with the finger being put over second upper-surface button (right) 130 as in holding as the controller in the lifted-up state. Therefore, even when the angle is relatively large, good operability can be maintained.

According to input device 1 according to the present embodiment, in the front-rear direction, the rear end of first upper-surface button (right) 140 may be located at the rear of the rear end of first side surface 11. Therefore, ease in holding of input device 1 when it is held as the controller in the lifted-up state is good and first button 32(1) is readily pressed down. In the operation as the mouse, a click operation of first button 32(1) is readily performed.

According to input device 1 according to the present embodiment, the length in the upward-downward direction of first side surface 11 and the length in the left-right direction of front surface 15 may be longer than the length in the front-rear direction of first side surface 11. Thus, holding as the controller in the lifted-up state by gripping input device 1 is facilitated, first upper-surface button (right) 140 and second upper-surface button (right) 130 are readily operated with the forefinger or the middle finger, and an input operation portion located at front surface 15 is readily operated with the thumb. Though first side surface 11 is short in length in the front-rear direction, it is long in length in the upward-downward direction. Therefore, stability in movement of input device 1 forward and rearward in the operation as the mouse is good. In the operation as the mouse, movement in the left-right direction with respect to the surface to be detected is less likely to wobble if the movement is minor, because the wrist serves as a fulcrum. Alternatively, also in large movement of input device 1, input device 1 is less likely to fall, because input device 1 can be held with front surface 15 and rear surface 16 being sandwiched.

According to input device 1 according to the present embodiment, first opening 170 that guides reflected light to mouse operation sensor 174 may be provided between the stick and the four buttons in the upward-downward direction. Thus, when input device 1 is held in such a manner that the stick or the four buttons are operable with the thumb in the example where the input device is used as the mouse, first opening 170 is located at a relatively central side of the hand when viewed from the direction perpendicular to the surface to be detected and hence the operation as the mouse in accordance with the user's intention is facilitated.

According to input device 1 according to the present embodiment, first opening 170 is provided in projection 100. Projection 100 is a portion to be attached to recess 310 in main body apparatus 3. First upper-surface button (right) 140, second upper-surface button (right) 130, and the direction input portion are provided at a portion other than projection 100. Therefore, while projection 100 is attached to recess 310, the user can use first upper-surface button (right) 140, second upper-surface button (right) 130, and the direction input portion. While projection 100 is attached to recess 310, first opening 170 is arranged inside recess 310. Therefore, when input device 1 is not used as the mouse, first opening 170 can be closed by main body apparatus 3.

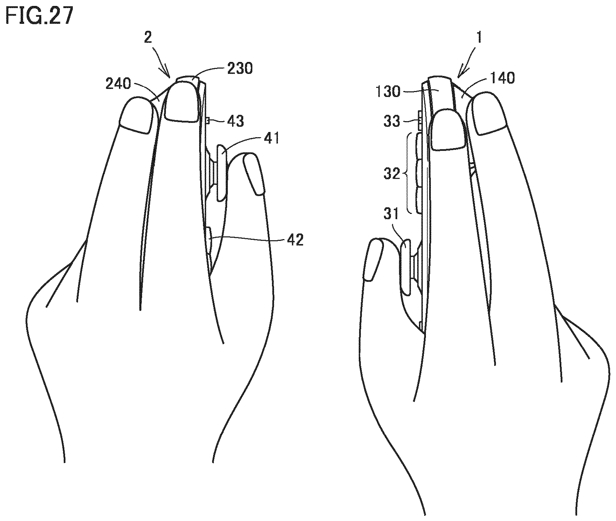

Fig. 27 is a schematic diagram showing a first state of use with both hands. As shown in Fig. 27, first input device 1 is operated as the mouse with the right hand and second input device 2 is operated as the mouse with the left hand. When each of first input device 1 and second input device 2 includes the mouse operation sensor, each of first input device 1 and second input device 2 can be used as the mouse.

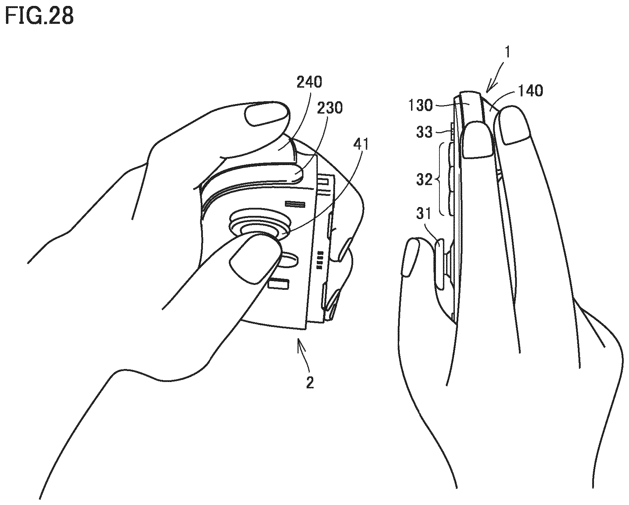

Fig. 28 is a schematic diagram showing a second state of use with both hands. The user may use one of first input device 1 and second input device 2 as the mouse and may use the other of first input device 1 and second input device 2 as vertically held input device 1. As shown in Fig. 28, first input device 1 may be operated as the mouse with the right hand. Second input device 2 may be operated as being vertically held with the left hand. In contrast, second input device 2 may be operated as the mouse with the left hand. First input device 1 may be operated as being vertically held with the right hand.

Fig. 29 is a schematic perspective view showing a state in which input device 1 is horizontally held. As shown in Fig. 29, a first user holds first input device 1 with both hands, and a second user holds second input device 2 with both hands. The first user can operate first side-surface button (right) 110 with the right forefinger and can operate one set of four buttons 32 with the right thumb. The first user can operate second side-surface button (right) 120 with the left forefinger and can operate joystick 31 with the left thumb. The second user can operate second side-surface button (left) 220 with the right forefinger and can operate one set of four buttons 42 with the right thumb. The second user can operate first side-surface button (left) 210 with the left forefinger and can operate joystick 41 with the left thumb.

When the input device is operated in the horizontally held state, one side of second opening 196 lies between first side-surface button (right) 110 and first opening 170 and the other side thereof lies between synchronization button 50 and second side-surface button (right) 120, and hence the user's finger is less likely to touch second opening 196. When the user attempts to operate synchronization button 50, the user's finger is less likely to touch first opening 170 because first opening 170 is located opposite with second opening 196 being interposed.

In the present embodiment, while input device 1 is not attached to main body apparatus 3, it is used as vertically held input device 1 with first side surface 11 facing sideways, used as horizontally held input device 1 with first side surface 11 facing up or front, and used as the mouse with first side surface 11 facing down. In other words, a single input device 1 can be used in three ways by change of a direction of holding in three directions.

In another manner, the first user may hold first input device 1 with both hands and the second user may hold second input device 2 with one hand. For example, the second user may hold second input device 2 with the right hand and may use the second input device as the mouse. In this case, the second user may operate first upper-surface button (left) 240 with the right forefinger, may operate second upper-surface button (left) 230 with the right middle finger, and may simply put the right thumb over rear surface 16.

Fig. 30 is a schematic front view showing a state in which first input device 1 and second input device 2 have been attached to main body apparatus 3. First input device 1 and second input device 2 are also configured to be used as being attached to main body apparatus 3.

As shown in Fig. 30, while first input device 1 and second input device 2 are attached to main body apparatus 3, they are used with the longitudinal direction of each of first input device 1 and second input device 2 coinciding with the upward-downward direction. The state shown in Fig. 30 is also called the integrally held state.

First upper-surface button (right) 140 and second upper-surface button (right) 130 are buttons arranged in an upper right portion of input device 1 in the integrally held state. First upper-surface button (left) 240 and second upper-surface button (left) 230 are buttons arranged in an upper left portion of input device 2 in the integrally held state. First upper-surface button (right) 140, second upper-surface button (right) 130, first upper-surface button (left) 240, and second upper-surface button (left) 230 may be used also in the integrally held state.

As shown in Figs. 24 to 29, on the other hand, first input device 1 and second input device 2 are also configured to be used in a state not attached to main body apparatus 3. In other words, first input device 1 and second input device 2 are configured to be used in each of a state in which they are attached to main body apparatus 3 and a state in which they are not attached to main body apparatus 3.

In an example where first input device 1 does not include projection 100, left side surface 4 of main body housing 10 corresponds to first side surface 11. In this case, first input device 1 may be used as the mouse with left side surface 4 being placed on surface to be detected F.

### <System>

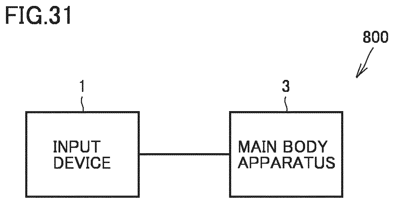

A configuration of a system according to the present disclosure will now be described. Fig. 31 is a block diagram showing the configuration of the system according to the present disclosure.

As shown in Fig. 31, a system 800 according to the present disclosure includes input device 1 and main body apparatus 3.

Main body apparatus 3 includes, for example, a CPU (not shown) and a wireless communication unit (not shown). The CPU can perform information processing. Input device 1 transmits information on operations on the input portion, information on detected reflected light, or the like to main body apparatus 3 through the wireless communication unit. Main body apparatus 3 performs various types of processing with the CPU based on received information. Main body apparatus 3 provides various outputs based on a result of processing. For example, the main body apparatus outputs image data or outputs a signal for having input device 1 emit light.

While input device 1 is attached to main body apparatus 3, wired communication or wireless communication may be established through terminals thereof. Electric power may be supplied and received between input device 1 and main body apparatus 3.

### [Second Embodiment]

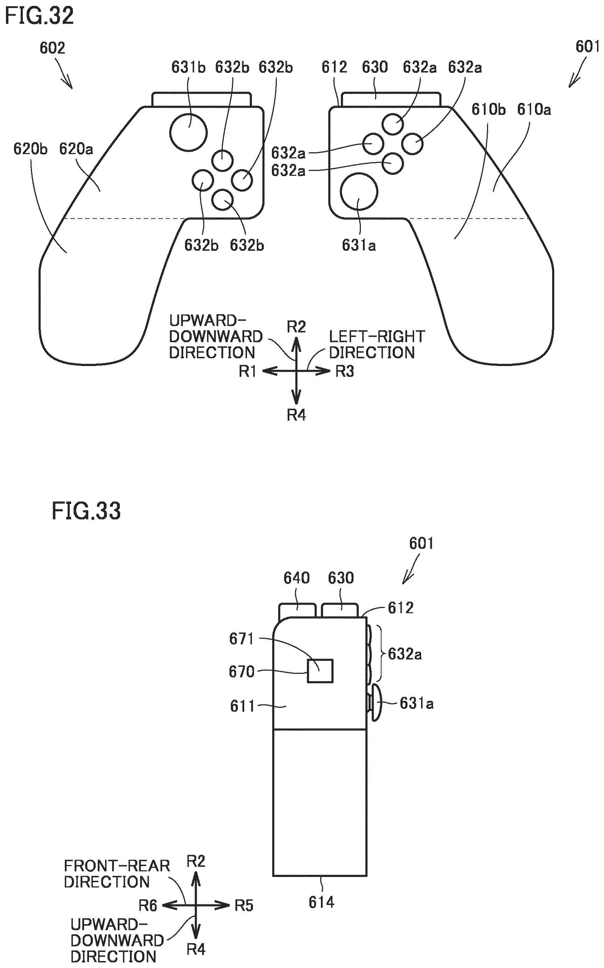

A configuration of an input device according to a second embodiment will now be described. Fig. 32 is a schematic front view showing the configuration of a first input device and a second input device according to the second embodiment.

As shown in Fig. 32, a first input device 601 includes a first main portion 610a and a first grip portion 610b. A front face of first main portion 610a is provided with four buttons 632a and a joystick 631a. Joystick 631a is provided at a lower left side of four buttons 632a. First grip portion 610b is a portion to be gripped by a user. First grip portion 610b is contiguous to a lower right portion of first main portion 610a. First grip portion 610b extends downward from first main portion 610a. First grip portion 610b may extend in the downward direction and the right direction or rearward. First main portion 610a is in a shape extending in the left direction, above first grip portion 610b.

A second input device 602 includes a second main portion 620a and a second grip portion 620b. A front face of second main portion 620a is provided with four buttons 632b and a joystick 631b. Joystick 631b is provided at an upper left side of four buttons 632a. A position of joystick 631b and positions of four buttons 632a may be interchanged. Second grip portion 620b is a portion, for example, to be gripped by the user. Second grip portion 620b is contiguous to a lower left portion of second main portion 620a. Second grip portion 620b extends in the downward direction from second main portion 620a. Second grip portion 620b may extend in the downward direction and the left direction or rearward. Second main portion 620a is in a shape extending in the right direction, above second grip portion 620b. In the present embodiment, a contour of first input device 601 and a contour of second input device 602 are in symmetry.

According to the present embodiment, first input device 601 and second input device 602 are not fixed to each other. First input device 601 and second input device 602 may include respective attachment portions (not shown) and they may directly or indirectly be attached to each other with the attachment portions. In this case, first input device 601 and second input device 602 may be used as an integrated controller to be held with both hands of the user. A peripheral device may be attached to each of first input device 601 and second input device 602.

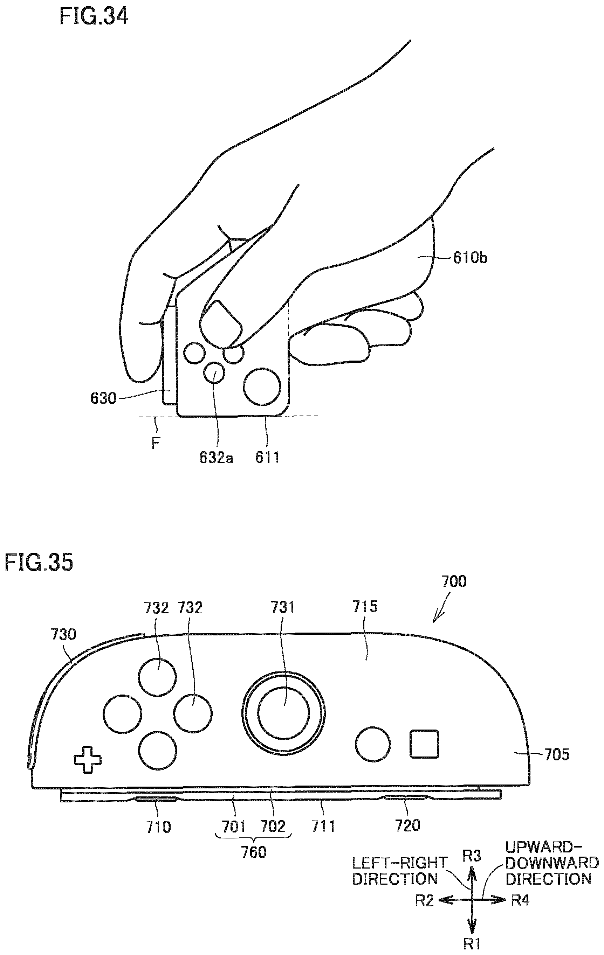

Fig. 33 is a schematic left side view of the configuration of first input device 601 according to the second embodiment. Fig. 34 is a schematic front view showing a state in which first input device 601 according to the second embodiment is operated as the mouse. An upper surface 612 of first input device 601 is provided with a first upper-surface button (right) 640 and a second upper-surface button (right) 630 (right). First upper-surface button (right) 640 pivots around a first rotation shaft (not shown). The first rotation shaft extends in a direction including a component in the left-right direction. As shown in Fig. 3, in an example where a first side surface 611 is placed as being opposed to surface to be detected F, an angle formed between surface to be detected F and the first rotation shaft is, for example, 70°. Second upper-surface button (right) 630 (right) linearly moves along the upward-downward direction.

A first opening 670 is provided in first side surface 611 which is a side surface at the left side in first input device 601. First opening 670 is provided in the side surface at the left side of first main portion 610a. A mouse operation sensor 671 is provided inside first opening 670.

As shown in Fig. 34, the user holds first input device 601 such that first side surface 11 is opposed to surface to be detected F. At this time, first grip portion 610b is distant from surface to be detected F. Therefore, while the user holds the first input device in such a manner as gripping first grip portion 610b, for example, with the right middle finger, the right ring finger, and the right little finger, the user can move first input device 601 over surface to be detected F with first side surface 11 being opposed to surface to be detected F. Four buttons 632a and/or joystick 631a can be operated with the right thumb of the user. First upper-surface button (right) 640 and/or second upper-surface button (right) 630 can be operated with the right forefinger of the user. First upper-surface button (right) 640 and/or second upper-surface button (right) 630 may be operated with the right middle finger of the user. The user can also hold first input device 601 with the upper surface facing up while the user lifts up first input device 601 from surface to be detected F.

First input device 601 may be in such a shape that first side surface 11 is placed on surface to be detected F as being opposed to surface to be detected F even when the user releases the first input device.

Though the contour of first input device 601 and the contour of second input device 602 are in symmetry in the above, they do not have to be so. For example, one input device set may include first input device 601 according to the first embodiment and second input device 602 according to the second embodiment. Second input device 602 according to the second embodiment does not have to include mouse operation sensor 671. The input devices do not have to be provided as a set. The shapes of the main portion and the grip portion are not limited as above.

### [Third Embodiment]

A configuration of an input device according to a third embodiment will now be described. Fig. 35 is a schematic front view showing the configuration of the input device according to the third embodiment. The input device according to the third embodiment is different from the first embodiment in that it is attached to the main body apparatus with a slider attachment portion. A difference will mainly be described below.

As shown in Fig. 35, an input device 700 according to the third embodiment includes a slider attachment portion 760. Slider attachment portion 760 includes a support portion 702 and a plate-shaped portion 701. Slider attachment portion 760 forms a first side surface 711. Slider attachment portion 760 extends, for example, along the upward-downward direction.

Support portion 702 is provided to project from a main body housing 705. Support portion 702 projects from main body housing 705 in first direction R1. Plate-shaped portion 701 is located on support portion 702. Plate-shaped portion 701 extends, for example, along the upward-downward direction. Plate-shaped portion 701 is located at the first direction R1 side relative to support portion 702. From another point of view, support portion 702 is located between main body housing 705 and plate-shaped portion 701.

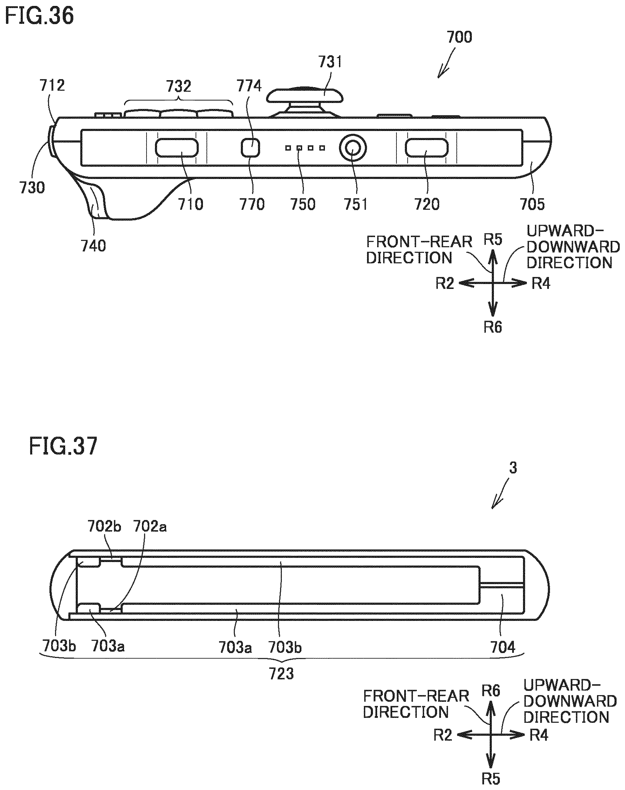

Fig. 36 is a schematic left side view showing the configuration of the input device according to the third embodiment. As shown in Fig. 36, input device 700 according to the third embodiment may include an upper surface 712, a first upper-surface button (right) 740, a second upper-surface button (right) 730, a first side-surface button (right) 710, a second side-surface button (right) 720, a light emission portion 750, a first opening 770, a mouse operation sensor 774, and a synchronization button 751. First upper-surface button (right) 740 and second upper-surface button (right) 730 are provided at upper surface 712.

First opening 770 is a hole through which reflected light from surface to be detected F is introduced. Reflected light from surface to be detected F is detected by mouse operation sensor 774 arranged at the rear of first opening 770.

Fig. 37 is a schematic right side view showing a configuration of main body apparatus 3. As shown in Fig. 37, main body apparatus 3 includes a rail member 723. Rail member 723 extends along the upward-downward direction. Rail member 723 includes two first rail portions 703a distant from each other, two second rail portions 703b distant from each other, and a stopper 704. Two first rail portions 703a are opposed to two second rail portions 703b. A first notch portion 702a is provided between two first rail portions 703a. A second notch portion 702b is provided between two second rail portions 703b.

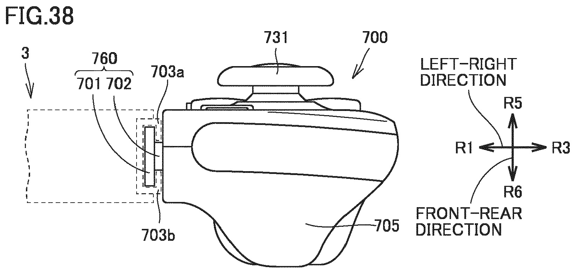

Fig. 38 is a schematic side view showing a state in which first input device 601 has been attached to main body apparatus 3. As shown in Fig. 38, in a cross-section along each of the left-right direction and the front-rear direction, slider attachment portion 760 is substantially in a T shape and rail member 723 is provided to cover slider attachment portion 760. First rail portion 703a and second rail portion 703b are arranged between plate-shaped portion 701 and main body housing 705. Slider attachment portion 760 is inserted in rail member 723 from the second direction R2 side along the fourth direction R4 side. Stopper 704 stops movement of slider attachment portion 760 by abutting on slider attachment portion 760.

Slider attachment portion 760 includes a not-shown engagement portion. As slider attachment portion 760 is inserted in rail member 723, the engagement portion is engaged with second notch portion 702b. Slider attachment portion 760 of first input device 601 is thus attached to rail member 723 of main body apparatus 3. As set forth above, in first input device 601, at least a part of first side surface 711 may form an attachment portion for attachment to another device (for example, main body apparatus 3).

### <Modification>

Though an example in which first input device 1 and second input device 2 each include mouse operation sensor 174 is described above, the present disclosure is not limited as such. For example, one of first input device 1 and second input device 2 may include mouse operation sensor 174 but the other of first input device 1 and second input device 2 does not have to include mouse operation sensor 174. First input device 1 and second input device 2 may be in such a structure as not being attached to main body apparatus 3 but being used only in a state independent of main body apparatus 3. At this time, first input device 1 and second input device 2 may directly or indirectly be fixed to each other.

As shown in the first example or the third example, a mechanism configured to attach the input device to the main body apparatus is not limited. As disclosed in the first and third examples, the input device is provided with the first opening that guides reflected light from the surface to be detected to mouse operation sensor 174 in a surface opposed to the main body apparatus while it is attached to the main body apparatus. The input device is provided with the first opening in an area not exposed to the outside while it is attached to the main body apparatus. The input device may be provided with the first opening in an area exposed to the outside also while it is attached to the main body apparatus.

First upper-surface button (right) 140 may also be capable of linear movement in addition to pivot.

Second upper-surface button (right) 130 may be incapable of pivot but may be capable only of linear movement.

Second upper-surface button (right) 130 may be incapable of linear movement but may be capable only of pivot.

The mechanism configured to detect operation of first upper-surface button (right) 140 is not limited to the structure above. For example, first input device 1 does not have to include first switch 581. In this case, operation of first upper-surface button (right) 140 may be sensed, for example, based on detection of an amount of rotation of first rotation shaft 515. Similarly, the mechanism configured to detect operation of second upper-surface button (right) 130 is not limited to the above either.

Though second upper-surface button (right) 130 is biased by first biasing member 141 and second biasing member 142 in the above, it may be biased by only one of them. Alternatively, a different biasing structure may be provided.

In the front-rear direction, the rear end of first upper-surface button (right) 140 may be located in front of the rear end of first side surface 11. In the front-rear direction, the front end of first upper-surface button (right) 140 may be located at the rear of the rear end of first side surface 11.

In the front-rear direction, the rear end of second upper-surface button (right) 130 may be located at the rear of the rear end of first side surface 11. In the front-rear direction, the front end of second upper-surface button (right) 130 may be located in front of the front end of first side surface 11.

The configuration of the first rotation shaft is not limited to the structure above. The first rotation shaft as functionality should only be implemented by a certain structure.

Main body apparatus 3 may be able to perform processing other than a game. Main body apparatus 3 may be a casing where an electronic device such as a tablet can be accommodated. At this time, main body apparatus 3 may electrically be connected to the electronic device or does not have to electrically be connected to the same. Main body apparatus 3 may electrically be connected to the input device or does not have to electrically be connected thereto. Main body apparatus 3 does not have to include the electronic device.

The input device may be configured to transform. The input device may be configured to transform in such a manner as being different in shape, for example, between a case where it is used as the mouse and a case where it is used in the lifted-up state. For example, the input device may be configured to transform in such a manner that a portion opposed to surface to be detected F becomes larger when it is used as the mouse.

In another manner, first upper-surface button (right) 140 does not have to pivot. The first upper-surface button may be capable only of linear movement. Alternatively, the structure may be such that, for example, one button in a form of a plate that covers both of the first switch and the second switch is provided and a switch located below the button is turned on depending on a pushed location. In these cases as well, the input device may be provided with at least a part of each structure described above. For example, the input device may be configured to be attached to the main body apparatus and may be provided with the first opening in an area not exposed to the outside while the input device is attached to the main body apparatus.

It should be understood that the embodiments disclosed herein are illustrative and non-restrictive in every respect. The scope of the present invention is defined by the terms of the claims rather than the description above and is intended to include any modifications within the scope and meaning equivalent to the terms of the claims.

### REFERENCE SIGNS LIST

1, 700 input device
1, 601 first input device
2, 602 second input device
3 main body apparatus
4 left side surface
5 height difference
10, 20, 705 main body housing
11, 611, 711 first side surface
12, 612, 712 upper surface
13 second side surface
14 lower surface
15, 715 front surface
16 rear surface
17 housing opening
18 raised portion
31, 41, 631a, 631b, 731 joystick, stick, direction input portion
32, 42, 632a, 632b, 732 four buttons
32(1) first button
32(2) second button
32(3) third button
32(4) fourth button
33(2) home button
33(1) + button
43(2) capture button
43(1) - button
50, 751 synchronization button
61 front-surface-side housing
62 rear-surface-side housing
81 first shaft, second rotation shaft
82 second shaft
100, 200 projection
101 first top surface area
103 third top surface area
106 top surface
107 outer peripheral surface
110, 710 first side-surface button (right)
120, 720 second side-surface button (right)
130, 630, 730 second upper-surface button (right)
131 second outer surface
132 second inner surface
133 third protrusion
134 fourth protrusion
135 fifth protrusion
137 second shaft hole
138 first shaft hole
140, 640, 740 first upper-surface button (right)
141 first biasing member
142 second biasing member
143 second switch
145 first portion
146 second portion
147 third portion
148 internal component
149 support surface
150, 250, 750 light emission portion
160 first terminal
170, 270, 670 first opening
171 light source
172 light reception sensor
174, 274, 671, 774 mouse operation sensor
181 pusher
182 ejection operation lever
183 biasing portion
191, 253 first mouse skate
192, 254 second mouse skate
193 first engagement hole
194 second engagement hole
196 second opening
210 first side-surface button (left)
220 second side-surface button (left)
230 second upper-surface button (left)
240 first upper-surface button (left)
260 second terminal
282 operation portion
301 audio input and output terminal
302 upper terminal
303 lower terminal
304 storage medium slot
305 display
307 power button
310, 320 recess
311 first recess bottom surface
312 first recess side surface
313 main body right side surface
314 main body left side surface
315 main body front face
316 main body upper side surface
317 main body lower side surface
321 second recess bottom surface
322 second recess side surface
330 first plug connector
331 main body first terminal
332 tongue-shaped body
340 second plug connector
341 main body second terminal
410 first magnetic element
420 second magnetic element
430 third magnetic element
440 fourth magnetic element
500 first main body portion
501 first plate-shaped portion
502 second plate-shaped portion
505 first main body recess
507 pushing portion
510 position displacement prevention rib
511 first rib portion
512 second rib portion
513 third shaft
514 fourth shaft
515 first rotation shaft
520 shaft receiver
521 first shaft receiving portion
522 second shaft receiving portion
530 third biasing portion
531 first coil spring portion
532 second coil spring portion
533 central connection portion
541 first rib accommodation portion
542 second rib accommodation portion
551 first flange portion
552 second flange portion
553 second main body portion
581 first switch
591 first outer surface
592 first inner surface
592a first side surface area
592b second side surface area
610a first main portion
610b first grip portion
620a second main portion
620b second grip portion
701 plate-shaped portion
702 support portion
702a first notch portion
702b second notch portion
703a first rail portion
703b second rail portion
704 stopper
723 rail member
760 slider attachment portion
770 first opening
800 system
1000 information processing apparatus
D1 first shaft hole width
D2 second shaft hole width
F surface to be detected
G distance
L1 first straight line
L2 second straight line
R1 first direction
R2 second direction
R3 third direction
R4 fourth direction
R5 fifth direction
R6 sixth direction
S1 direction of first arrow
S2 direction of second arrow
S3 direction of third arrow
W1 first length
W2 second length
W3 third length
W4 fourth length

## Claims

1. An input device comprising:
a front surface, an upper surface, a first side surface located at one side in a left-right direction, and a second side surface located at the other side in the left-right direction;
a direction input portion provided at the front surface;
a first upper-surface button provided at the upper surface, the first upper-surface button being configured to be pressed down around a first rotation shaft that extends in a direction including a component in the left-right direction; and
a mouse operation sensor configured to detect reflected light from a surface to be detected, the reflected light varying as the input device moves over the surface to be detected with one side surface of the first side surface and the second side surface being placed on the surface to be detected.

2. The input device according to claim 1, wherein
the first rotation shaft extends in a direction inclined toward a lower side of the input device with respect to a direction perpendicular to the surface to be detected when the one side surface is placed on the surface to be detected.

3. The input device according to claim 2, wherein
an angle formed between the surface to be detected and the first rotation shaft when the one side surface is placed on the surface to be detected is an acute angle larger than 45°.

4. The input device according to claim 2, wherein
an angle formed between the surface to be detected and the first rotation shaft when the one side surface is placed on the surface to be detected is 45°.

5. The input device according to any one of claims 1 to 4, wherein
the first rotation shaft extends along a plane direction in parallel to the front surface.

6. The input device according to any one of claims 1 to 4, further comprising a front-surface button provided at the front surface, the front-surface button being configured to be pressed down in a linear direction, wherein
the first rotation shaft extends along a plane direction perpendicular to the linear direction.

7. The input device according to any one of claims 1 to 6, further comprising a second upper-surface button provided at the upper surface and in front of the first upper-surface button.

8. The input device according to any one of claims 1 to 6, further comprising a second upper-surface button provided at the upper surface and in front of the first upper-surface button, the second upper-surface button being configured to be pushed in in a linear direction.

9. The input device according to any one of claims 1 to 6, further comprising a second upper-surface button provided at the upper surface and in front of the first upper-surface button, the second upper-surface button being configured to pivot around a second rotation shaft that extends in a direction including a component in a front-rear direction.

10. The input device according to any one of claims 1 to 6, further comprising a second upper-surface button provided at the upper surface and in front of the first upper-surface button, the second upper-surface button being configured to be pushed in a linear direction and being configured to pivot around a second rotation shaft that extends in a direction including a component in a front-rear direction.

11. The input device according to claim 9 or 10, wherein
the second rotation shaft extends in a direction in parallel to the surface to be detected when the one side surface is placed on the surface to be detected.

12. The input device according to any one of claims 7 to 11, wherein
the first rotation shaft extends in a direction in parallel to a plane direction in which the second upper-surface button is movable.

13. The input device according to any one of claims 7 to 12, wherein
in an upward-downward direction, the first upper-surface button has an upper end located at a lower side relative to an upper end of the second upper-surface button and there is a height difference between the first upper-surface button and the second upper-surface button.

14. The input device according to any one of claims 7 to 13, further comprising a switch activated by pressing down of the second upper-surface button, wherein
a support surface of the switch is configured to be oriented in a direction inclined toward a lower side of the input device with respect to a direction perpendicular to the surface to be detected when the one side surface is placed on the surface to be detected.

15. The input device according to claim 14, further comprising a first biasing member and a second biasing member configured to bias the second upper-surface button upward, wherein
the switch is arranged between the first biasing member and the second biasing member in the left-right direction.

16. The input device according to claim 14 or 15, wherein
an angle formed between the surface to be detected and the support surface when the one side surface is placed on the surface to be detected is larger than 45°.

17. The input device according to claim 16, wherein
the angle formed between the surface to be detected and the support surface when the one side surface is placed on the surface to be detected is equal to or larger than 60°.

18. The input device according to any one of claims 9 to 17, wherein
the second upper-surface button includes one of a first shaft hole and a first shaft to be arranged in the first shaft hole and one of a second shaft hole and a second shaft to be arranged in the second shaft hole,
the input device comprises the other of the first shaft hole and the first shaft and the other of the second shaft hole and the second shaft, and
the second shaft hole is provided at a side opposite to the one side surface in the left-right direction relative to the first shaft hole and longer in the left-right direction than the first shaft hole.

19. The input device according to claim 18, wherein
the first shaft is movable in an upward-downward direction in the first shaft hole and the second shaft is movable in the upward-downward direction in the second shaft hole.

20. The input device according to any one of claims 1 to 19, wherein
in a front-rear direction, a length from the one side surface to a rear end of a rear surface located opposite to the front surface is longer than a length from the one side surface to a front end of the front surface.

21. The input device according to any one of claims 1 to 20, wherein
in a front-rear direction, the first upper-surface button has a rear end located at rear of a rear end of the one side surface.

22. The input device according to any one of claims 1 to 21, wherein
a length in an upward-downward direction of the one side surface and a length in the left-right direction of the front surface are longer than a length in a front-rear direction of the one side surface.

23. The input device according to any one of claims 1 to 22, further comprising:
a hole through which reflected light is guided to the mouse operation sensor, the hole being provided in the one side surface; and
one set of four buttons provided at the front surface, wherein
in an upward-downward direction, the hole is located between a stick which serves as the direction input portion and the one set of four buttons.

24. The input device according to claim 23, wherein
at least a part of the one side surface implements an attachment portion for attachment to another device, and
the hole is provided at the attachment portion.

25. The input device according to claim 24, configured to directly or indirectly be fixed to another input device.

26. The input device according to claim 25, wherein
the another input device comprises a mouse operation sensor.

27. The input device according to any one of claims 23 to 26, wherein
in an upward-downward direction, the first upper-surface button has a lower end located between an upper end and a lower end of the one set of four buttons.

28. The input device according to claim 27, wherein
the one set of four buttons includes a first button and a second button distant from each other in the upward-downward direction and a third button and a fourth button being distant from each other in the left-right direction and arranged between the first button and the second button in the upward-downward direction, and
in the upward-downward direction, the lower end of the first upper-surface button is located between an upper end and a lower end of each of the third button and the fourth button.

29. The input device according to any one of claims 23 to 26, wherein
in the upward-downward direction, the first upper-surface button has a lower end located between an upper end and a lower end of the stick.

30. The input device according to any one of claims 1 to 29, the input device being attachable to a main body apparatus, the input device further comprising an ejection operation lever provided at a rear surface located opposite to the front surface, the ejection operation lever being movable from the one side surface toward the other side surface of the first side surface and the second side surface.

31. A system comprising:
the input device according to any one of claims 1 to 30; and
a main body apparatus that communicates with the input device.
